# EUROPÄISCHE PATENTANMELDUNG

(11) **EP 4 623 770 A1**
(43) Veröffentlichungstag der Anmeldung: **01.10.2025**
(21) Anmeldenummer: 24167647.7
(22) Anmeldetag: 28.03.2024
(51) Int. Cl.: A47J 36/32, A47J 43/08

(54) **ANTRIEB FÜR EIN RÜHRWERK, KÜCHENMASCHINE DAMIT UND VERFAHREN ZUR STEUERUNG DES ANTRIEBS**

(71) Anmelder: Vorwerk & Co. Interholding GmbH, 42275 Wuppertal (DE)
(72) Erfinder: Stroh, Simon, 42929 Wermelskirchen (DE); Seibt, Patrick, 40789 Monheim am Rhein (DE)
(74) Vertreter: Von Rohr Patentanwälte Partnerschaft mbB

(57) **Zusammenfassung**

Die vorliegende Erfindung betrifft einen Antrieb (1) für ein Rührwerk (2) einer elektrisch betriebenen Küchenmaschine (100), eine Küchenmaschine (100) und ein Verfahren, wobei der Antrieb (1) einen Elektromotor (3) und einen Antriebsregler (4) zur Regelung des Elektromotors (3), insbesondere seiner Rotordrehzahl oder Rotorposition, aufweist, wobei der Antriebsregler (4) einen Dynamikparametereingang (7) aufweist, über den dem Antriebsregler (4) mindestens ein Dynamikparameter (8) vorgebbar ist, und wobei der Antriebsregler (4) dazu ausgebildet ist, durch Änderung des Dynamikparameters (8) sein Regelverhalten, insbesondere seine Regelgeschwindigkeit, zu ändern.

## Beschreibung

Die vorliegende Erfindung betrifft einen Antrieb für ein Rührwerk einer elektrisch betriebenen Küchenmaschine, eine Küchenmaschine mit dem Antrieb und ein Verfahren zur Steuerung des Antriebs.

Insbesondere betrifft die vorliegende Erfindung den Antrieb des Rührwerks einer Küchenmaschine zum Durchführen eines Zubereitungsvorgangs durch Erhitzen, Zerkleinern und/oder Mischen zur Herstellung eines Produkts, wie einer Speise oder eines Zwischenprodukts, in einem Zubereitungsgefäß.

Besonders bevorzugt handelt es sich um eine Küchenmaschine, die gespeicherte Rezepte bereitstellt und ein zumindest teil-automatisiertes Durchführen von mehreren Schritten eines Rezeptes unterstützt.

Grundsätzlich kann die vorliegende Erfindung jedoch auch in anderen Küchengeräten, wie Mixer, Haushaltsgeräten oder weiteren technischen Bereichen, eingesetzt werden und vorteilhaft sein, sodass die Erfindung zwar im Kontext der in Rede stehenden Küchenmaschinen besonders vorteilhaft, jedoch nicht hierauf beschränkt ist.

Antriebe für Rührwerke elektrisch betriebener Küchenmaschinen der in Rede stehenden Art weisen einen Elektromotor und einen Antriebsregler zur Regelung des Elektromotors auf. Unter der Regelung des Elektromotors ist bevorzugt die Regelung einer Rotorbewegung, also der Bewegung eines antreibbaren Rotors, des Elektromotors zu verstehen. Insbesondere ist der Antriebsregler zur Regelung einer Rotordrehzahl und/oder Rotorposition des Elektromotors bzw. seines Rotors ausgebildet.

Die EP 3 705 006 A1 betrifft eine Küchenmaschine zum Durchführen eines Speisenzubereitungsvorgangs mit einem Elektromotor zum Antrieb eines Rührers mit einem Drehmoment und einer Drehzahl, die von dem Motorstrom zum Betreiben des Elektromotors abhängen. Die Küchenmaschine umfasst ein Display zum Anzeigen eines Hinweises und ein Betätigungselement zum Betätigen einer Benutzerschnittstelle durch einen Benutzer. Die Küchenmaschine umfasst eine Steuerungseinheit sowie einen Prozessor und einen Speicher, wobei ein Programmcode auf dem Speicher gespeichert werden kann, dessen Befehle die Steuerungseinheit dazu veranlassen, Verfahrensschritte auszuführen, insbesondere durch Steuerung des Elektromotors.

Übliche Antriebsregler bzw. Elektromotorsteuerungen von Küchenmaschinen weisen eine fest vorgegebene Regelungs-Charakteristik auf. Insbesondere bei Lastwechseln, die durch Hinzufügen von Zutaten in das Zubereitungsgefäß auftreten, kompensieren bekannte Antriebsregler eine hierdurch hervorgerufene Drehzahländerung regelmäßig auf Basis einer fest vorgegebenen Charakteristik durch Vergrö-ßerung des Drehmoments.

Es hat sich gezeigt, dass ein verbesserter Einfluss auf die Konsistenz des Produkts, also der Speise oder des Zwischenprodukts wünschenswert ist, insbesondere um ein grobes oder zu feines Ergebnis - je nach Speise oder Zutaten - zu vermeiden.

Eine Aufgabe der vorliegenden Erfindung ist es vor diesem Hintergrund, einen Antrieb für ein Rührwerk einer elektrisch betriebenen Küchenmaschine, eine Küchenmaschine und ein Verfahren zur Steuerung des Antriebs für ein Rührwerk einer elektrisch betriebenen Maschine anzugeben, wodurch die Konsistenz des mit der Küchenmaschine herstellbaren Produkts positiv beeinflusst werden kann.

Diese Aufgabe wird durch einen Antrieb gemäß Anspruch 1, eine Küchenmaschine gemäß Anspruch 10, ein Verfahren gemäß Anspruch 14 oder ein Computerprogrammprodukt gemäß Anspruch 15 gelöst. Vorteilhafte Weiterbildungen sind Gegenstand der Unteransprüche.

Vorschlagsgemäß weist der Antriebsregler des Antriebs einen Dynamikparametereingang auf. Über den Dynamikparametereingang ist dem Antriebsregler ein Dynamikparameter vorgebbar. Der Antriebsregler ist dazu ausgebildet, durch Änderung des Dynamikparameters, der am Dynamikparametereingang vorgegeben ist bzw. anliegt, sein Regelverhalten zu ändern.

Durch das vorschlagsgemäß einstellbare Regelverhalten kann in vorteilhafter Weise beeinflusst werden, wie der Antrieb bzw. der Elektromotor und damit auch der hiermit antreibbare Rührer, der in dem Zubereitungsgefäß der Küchenmaschine angeordnet ist, durch den Elektromotor bzw. Antrieb drehbar ist, anläuft oder auf Lastwechsel reagiert.

In vorteilhafter Weise kann hierdurch beeinflusst werden, wie (schnell) der Rührer beschleunigt wird, beispielsweise aus einer Ruheposition, und/oder wie (schnell) sein Drehmoment verändert wird, insbesondere zum Halten, Erreichen oder Wiederherstellen einer Soll-Drehzahl.

Letztlich lassen sich unterschiedliche Zubereitungsvorgänge mit derselben Küchenmaschine erreichen. Denn mittels des Dynamikparameters kann eingestellt werden, ob Zutaten im Zubereitungsgefäß durch einen allmählich beschleunigten Rührer bzw. Rührer mit allmählicher Drehmomentzunahme schonend bewegt oder beschleunigt werden oder ob Zutaten im Zubereitungsgefäß durch einen abrupt beschleunigten Rührer bzw. Rührer mit abrupter Drehmomentzunahme zerkleinert, insbesondere zerschlagen werden.

Besonders bevorzugt führt eine Änderung des Dynamikparameters am Dynamikparametereingang zu einer Änderung einer Rotor-Drehmoment-Änderungs-Charakteristik des Antriebsreglers. Mit anderen Worten kann der Dynamikparameter vorgeben, in welcher Art und Weise, insbesondere Geschwindigkeit, der Antriebsregler das Drehmoment des Elektromotors, insbesondere bei Lastwechseln und/oder Änderungen der Soll-Drehzahl oder eines anderen Betriebsparameters des Elektromotors, nachregelt.

Ein weiterer, auch unabhängig realisierbarer Aspekt der vorliegenden Erfindung betrifft eine Küchenmaschine mit dem vorschlagsgemäßen Antrieb. Die Küchenmaschine weist ein Rührwerk auf, das mittels des Antriebs antreibbar ist. Hierzu ist der Antrieb mit einem Rührer der Küchenmaschine koppelbar oder gekoppelt. Der Rührer ist mittels des Antriebs im Zubereitungsgefäß bewegbar, um im Zubereitungsgefäß aufgenommene Produkte bzw. Zutaten zu verarbeiten.

Es hat sich herausgestellt, dass die Küchenmaschine durch den Antrieb eine verbesserte Verarbeitung der Lebensmittel bzw. Zutaten durch die Küchenmaschine ermöglicht. Denn letztlich kann durch Veränderung des Dynamikparameters, der dem Antriebsregler am Dynamikparametereingang vorgegeben oder vorgebbar ist, eine Beschleunigung bzw. Drehmomentänderungsrate des Rührers variiert werden, sodass eine Drehmoment- bzw. Drehzahländerung schneller oder langsamer erfolgt. Hierdurch kann insbesondere ein Anlaufverhalten, ein Beschleunigungsverhalten bei vorgegebener Soll-Drehzahl und/oder ein Nachführverhalten bei Änderung eines Systemzustands wie einer (Motor-) Laständerung, die durch Hinzufügen von Zutaten resultieren kann, geändert werden. Insbesondere ist es in vorteilhafter Weise möglich, dass durch Variation des Dynamikparameters zu verarbeitende Produkte entweder schonend rührend oder zerkleinernd verarbeitet werden können.

Ein weiterer, auch unabhängig realisierbarer Aspekt der vorliegenden Erfindung betrifft ein Verfahren zur Steuerung des vorschlagsgemäßen Antriebs, wobei durch Änderung des dem Antriebsreglers vorgegebenen Dynamikparameters das Regelverhalten des Antriebsreglers geändert wird. Der Antrieb bildet vorzugsweise einen Teil der vorschlagsgemäßen Küchenmaschine und treibt den Rührer dieser entsprechend an. Durch die Änderung des Dynamikparameters können die bereits beschriebenen Effekte und Vorteile erreicht werden.

Ein weiterer, auch unabhängig realisierbarer Aspekt der vorliegenden Erfindung betrifft ein Computerprogrammprodukt aufweisend Programmcodemittel die, wenn sie ausgeführt werden, bei einem vorschlagsgemäßen Antrieb bzw. einer vorschlagsgemäßen Küchenmaschine das vorschlagsgemäße Verfahren ausführen. Hierzu kann der Antrieb bzw. die Küchenmaschine einen Prozessor zur Ausführung der Programmcodemittel aufweisen.

Ein Antrieb für ein Rührwerk im Sinne der vorliegenden Erfindung ist eine Einrichtung, die dazu geeignet, ausgebildet und/oder eingesetzt wird oder ist, einen Rührer in Bewegung, insbesondere Rotation, zu versetzen, damit dieser auf ein Produkt bearbeitend einwirken kann.

Ein Rührwerk im Sinne der vorliegenden Erfindung weist den Antrieb und den hiermit antreibbaren Rührer auf. Der Antrieb weist hierzu den Elektromotor auf, dessen Rotor mit dem Rührer mechanisch und bevorzugt drehfest gekoppelt ist, sodass sich eine Drehung des Rotors des Elektromotors unmittelbar oder mittelbar auf den Rührer überträgt, insbesondere über eine Welle.

Ein Antriebsregler im Sinne der vorliegenden Erfindung ist vorzugsweise eine elektronische Komponente zur Erzeugung einer Stellgröße, die den Elektromotor ansteuert bzw. betreibt, und zwar auf Basis eines Vergleichs eines Ist-Betriebsparameters (Regelgröße), der den aktuellen Betriebszustand des Elektromotors charakterisiert, mit einem Soll-Betriebsparameter (Sollwert), der einen vorgegebenen oder vorgebbaren Betriebszustand des Elektromotors charakterisiert. Der Antriebsregler ist damit vorzugsweise zur Regelung des Betriebszustands des Elektromotors ausgebildet und eingerichtet.

Ein Betriebszustand des Elektromotors ist oder korrespondiert vorzugsweise zu einer Drehzahl (insbesondere Rotordrehzahl) und/oder einem Drehmoment (insbesondere am Rotor) und/oder zu einer Position des Rotors des Elektromotors. Im Folgenden wird die Rotordrehzahl oder hierzu korrespondierende Drehzahl des Rührers auch kurz Drehzahl bzw. das Drehmoment am Rotor oder korrespondierend hierzu am Rührer auch kurz Drehmoment genannt, sodass diese Begriffe synonym und austauschbar sind, wenn sich aus dem Zusammenhang nichts Gegenteiliges ergibt.

Ein Dynamikparameter im Sinne der vorliegenden Erfindung ist vorzugsweise ein Parameter, dessen Änderung geeignet ist, die Dynamik des Antriebsreglers derart zu beeinflussen, dass sein Regelverhalten insbesondere beim Anlaufen des Elektromotors und/oder bei Änderung der Last, Drehzahl und/oder Position des Elektromotors oder seines Rotors bestimmt oder geändert wird oder ist. Der Dynamikparameter ist eine vorzugsweise manuell veränderbare und/oder durch ein Programm oder Rezept vorgebbare Größe, kann also insbesondere durch Benutzereingriff unmittelbar oder mittelbar vorgegeben und geändert werden. Der Dynamikparameter ist vorzugsweise durch Betriebsparameter bzw. die Regelung unbeeinflussbar.

Grundsätzlich können mehrere Dynamikparameter vorgesehen sein, die jeweils oder gemeinsam die im Zusammenhang mit dem Dynamikparameter beschriebenen Eigenschaften aufweisen. Der Übersichtlichkeit halber wird die Erfindung im Folgenden anhand eines Dynamikparameters erläutert. Insofern kann der Begriff "ein/der Dynamikparameter" bedarfsweise durch den Begriff "mehrere/die Dynamikparameter" ersetzt werden.

Der Dynamikparameter kann grundsätzlich ein Einzelwert (Zahlenwert), insbesondere ein Koeffizient, sein. Mehrere Dynamikparameter können als Satz mehrerer Werte, beispielsweise in Form eines Vektors, einer Matrix oder einer sonstigen Wertemenge vorliegen. Die Dynamikparameter können insbesondere durch mehrere Koeffizienten einer Funktion gebildet sein, anhand derer das Verhalten des Antriebsreglers bestimmt wird oder ist. Beispielsweise können pro Einstellung der Dynamik mehr als zwei oder drei und/oder weniger als 20 oder 15 Dynamikparameter bzw. Werte vorgesehen sein.

Alternativ oder zusätzlich kann der Dynamikparameter im Sinne der vorliegenden Erfindung ein Platzhalter oder Identifikator für den einen oder die mehreren Werte, insbesondere Koeffizienten, sein. So kann vorgesehen sein, dass der Dynamikparameter in Form eines oder mehrerer Platzhalter, Symbole, Skalenelemente o.dgl. vorliegt. Die Funktion des Dynamikparameters, durch seine Änderungen die Dynamik des Antriebsreglers wie beschrieben zu beeinflussen, bleibt hiervon unberührt. Eine unmittelbare Vorgabe oder Änderung des Dynamikparameters kann durch eine Benutzereingabe erfolgen. Eine mittelbare Vorgabe oder Änderung kann durch Wahl eines Rezepts erfolgen, das einen bestimmten Dynamikparameter oder Verlauf mit einem sich im Verlauf verändernden Dynamikparameter aufweist, der dann entsprechend dem Antriebsregler bei Anwendung des Rezepts vorgegeben wird oder ist. Grundsätzlich kann der Dynamikparameter jedoch auch auf andere Weise vorgegeben oder geändert werden.

Ein Dynamikparametereingang im Sinne der vorliegenden Erfindung ist vorzugsweise eine Schnittstelle zur Übergabe des Dynamikparameters an den Antriebsregler, wodurch das Regelverhalten, insbesondere die Regelgeschwindigkeit, des Antriebsreglers in Abhängigkeit von dem am Dynamikparametereingang vorgegebenen oder vorgebbaren Dynamikparameter bestimmt oder geändert wird oder ist.

Eine Dynamik bzw. Trägheit der Regelung im Sinne der vorliegenden Erfindung gibt vorzugsweise als Verhalten des Antriebsreglers vor, wie durch Ansteuerung bzw. Energieversorgung des Elektromotors bewirkt wird, dass sich ein Betriebszustand des Elektromotors ändert, besonders bevorzugt wie schnell (Regelgeschwindigkeit).

Als Regelgeschwindigkeit im Sinne der vorliegenden Erfindung wird vorzugweise eine Änderungsrate bzw. ein Gradient eines Regelgrößen-Verlaufs oder Stellgrößen-Verlaufs insbesondere bei Änderung von Sollwerten, Systemzuständen bzw. Betriebsparametern verstanden. Die Regelgeschwindigkeit beschreibt im Zusammenhang mit dem Regelverhalten die Eigenschaft der Regelung, eine Regelgröße oder dieser zugrundeliegenden Stellgröße mehr oder weniger schnell bzw. träge nachzuführen.

Ein Betriebszustand bzw. der dazu korrespondierende Ist-Betriebsparameter des Elektromotors im Sinne der vorliegenden Erfindung ist vorzugsweise die (gemessene) Drehzahl, die (gemessene) (Rotor-)Position oder das Drehmoment des Elektromotors. Alternativ oder zusätzlich handelt es sich bei dem Betriebszustand um eine zur Drehzahl, zur (Rotor-)Position oder zum Drehmoment des Elektromotors korrespondierende Größe, wie einen Strom, mit dem der Elektromotor betrieben wird, insbesondere eine Stromstärke und/oder Phasenlage, eine Leistungsaufnahme bzw. Stromaufnahme des Elektromotors.

Eine Position des Elektromotors ist oder korrespondiert vorzugsweise zu der Drehlage des Rotors des Elektromotors. Dies schließt auch eine Drehlage nach einer vorgegebenen oder vorgebbaren Anzahl von vollständigen Umdrehungen des Rotors ein. Eine Position kann also durch eine gewisse, ggf. auch bruchteilig angebbare, Anzahl von Umdrehungen des Rotors bestimmt, bestimmbar, vorgegeben und/oder vorgebbar sein.

Weitere Aspekte der vorliegenden Erfindung ergeben sich aus den Ansprüchen sowie der folgenden Beschreibung bevorzugter Ausführungsbeispiele anhand der Zeichnung. Es zeigen:
- Fig. 1: ein schematisches Blockschaltbild einer vorschlagsgemäßen Küchenmaschine;
- Fig. 2: ein Flussdiagramm betreffend die Einstellung der vorschlagsgemäßen Küchenmaschine bei einstellbarem Dynamikparameter;
- Fig. 3: einen schematischen Querschnitt einer vorschlagsgemäßen Küchenmaschine;
- Fig. 4: ein Diagramm von Drehzahlverläufen des Motors; und
- Fig. 5: ein Diagramm von zu den Drehzahlverläufen aus Fig. 4 korrespondierenden Drehmomentverläufen des Motors.

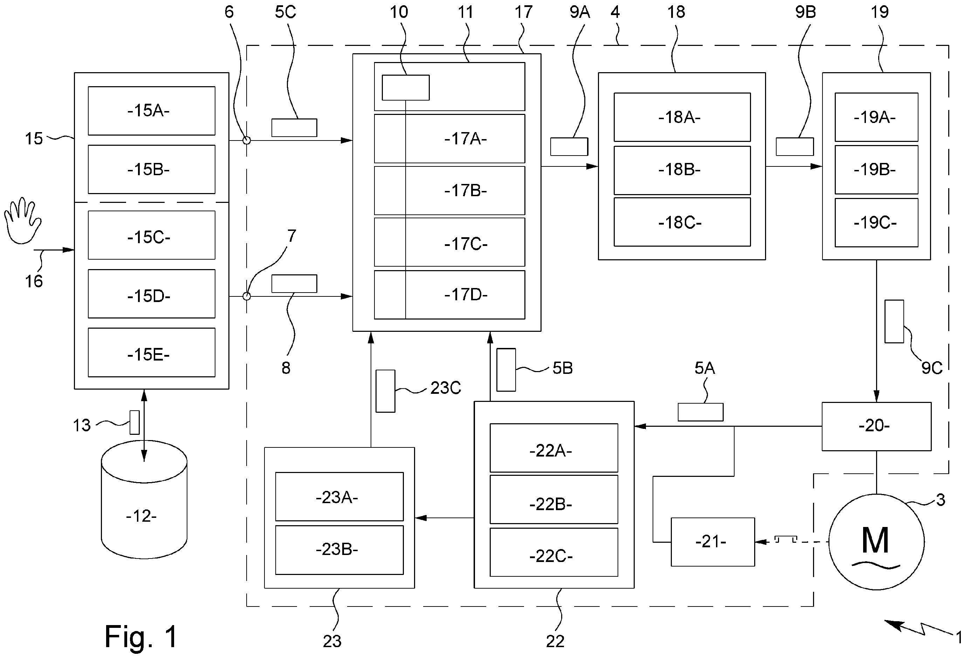

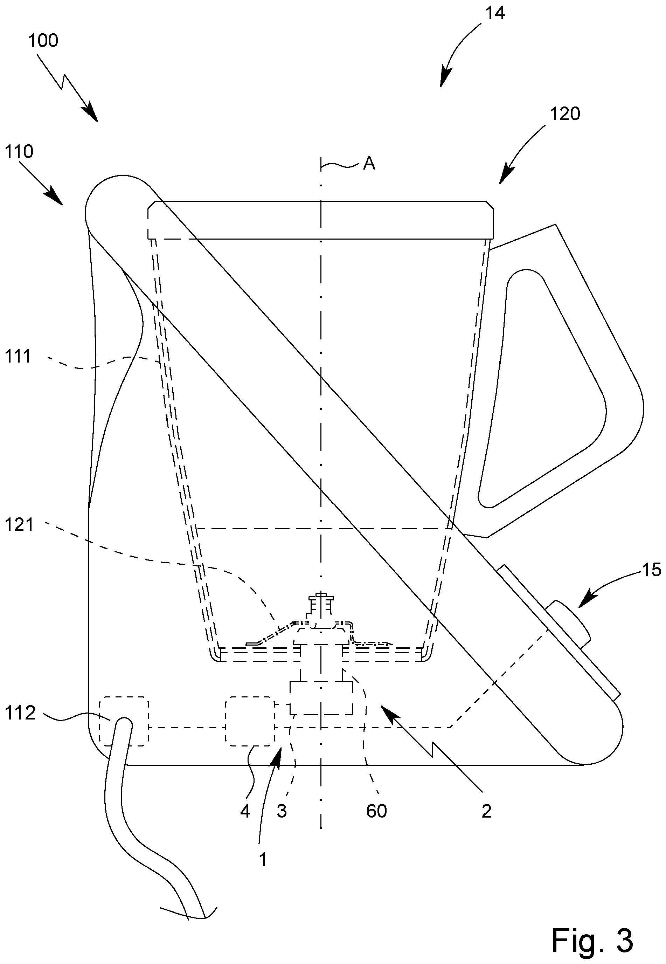

Fig. 1 zeigt einen vorschlagsgemäßen Antrieb 1 eines Rührwerks 2 (in Fig. 1 nicht dargestellt). Der Antrieb 1 bzw. das Rührwerk 2 sind zum Betrieb einer elektrisch betriebenen Küchenmaschine 100, die beispielhaft in Fig. 3 dargestellt ist, ausgebildet.

Bezugnehmend auf Fig. 3 kann die Küchenmaschine 100 ein Produkt 14 herstellen bzw. verarbeiten, insbesondere mittels eines Rührers 121 in einem Zubereitungsgefäß 120. Hierfür kann der Antrieb 1 den in dem Zubereitungsgefäß 120 angeordneten Rührer 121 antreiben.

Der Antrieb 1 weist einen Elektromotor 3 und einen Antriebsregler 4 zur Regelung einer Bewegung eines Rotors gegenüber einem Stator des Elektromotors 3 auf. Der Elektromotor 3 ist direkt oder indirekt mit dem Rührer 120 bzw. über eine Welle 60 des Elektromotors 3 bzw. seines Rotors gekoppelt, sodass der Elektromotor 3 den Rührer 121 antreibt.

Der Antriebsregler 4 ist insbesondere zur Regelung der Rotordrehzahl, Rotorposition und/oder des Drehmoments des Elektromotors 3 und vorzugsweise mittelbar zur Regelung der Drehzahl, der Position und/oder des Drehmoments des Rührers 121 ausgebildet. Bei dem Antriebsregler 4 kann es sich um einen PID-Regler handeln. Grundsätzlich sind jedoch auch andere Reglerkonzepte möglich.

Dem Antrieb 1 bzw. dem Antriebsregler 4 ist vorzugsweise eine Eingabeeinrichtung 15 zugeordnet. Die Eingabeeinrichtung 15 bildet vorzugsweise einen Teil der Küchenmaschine 100.

Die Eingabeeinrichtung 15 kann einen körperlichen Teil der vorschlagsgemäßen Küchenmaschine 100 bilden. Hierbei ist die Eingabeeinrichtung 15 vorzugsweise in einem Gehäuse bzw. einer Basisstation 110 der Küchenmaschine 100 angeordnet bzw. fest integriert. Die Eingabeeinrichtung 15 kann jedoch alternativ oder zusätzlich räumlich getrennt von der Basisstation 110 realisiert sein, beispielsweise durch eine Anwendung (App) auf einem mit dem Antriebsregler 4 beispielsweise (drahtlos) gekoppelten (mobilen) Endgerät, wie einem Smartphone oder dergleichen.

Die Eingabeeinrichtung 15 kann eine Benutzerschnittstelle direkt an der Küchenmaschine 100 oder eine hiermit insbesondere drahtlos gekoppelte Benutzerschnittstelle sein oder aufweisen.

Der Antrieb 1 bzw. sein Elektromotor 3 weist vorzugsweise mindestens einen Betriebsparameter 5 auf. Der Betriebsparameter 5 repräsentiert eine Betriebseigenschaft des Elektromotors 3, ganz besonders bevorzugt seine Rotordrehzahl, sein Rotordrehmoment und/oder seine Rotorposition (Drehlage). Alternativ oder zusätzlich kann der Betriebsparameter 5 auch eine andere Betriebseigenschaft des Elektromotors 3 repräsentieren, die vorzugsweise in unmittelbarem Zusammenhang mit der Rotorbewegung bzw. Abgabe mechanischer Energie mittels des Rotors steht. Bezugnehmend auf den in Fig. 1 schematisch dargestellten Antriebsregler 4 kann als Betriebsparameter 5 ein Ist-Betriebsparameter 5A vorgesehen sein, der eine aktuelle tatsächliche Betriebseigenschaft des Elektromotors 3 repräsentiert. Der (unkonvertierte und/oder gemessene und/oder Roh-) Ist-Betriebsparameter 5A kann bedarfsweise zu einem konvertierten Ist-Betriebsparameter 5B konvertiert werden. Darüber hinaus kann ein Soll-Betriebsparameter 5C als Vorgabe für den Ist-Betriebsparameter 5A bzw. konvertierten Ist-Betriebsparameter 5B vorgesehen sein.

Der Begriff Betriebsparameter 5 kann synonym zu Ist-Betriebsparameter 5A und/oder konvertierter Ist-Betriebsparameter 5B verstanden werden. Er kann aber auch den Soll-Betriebsparameter 5C umfassen oder synonym hierzu verstanden werden. Entsprechend kann der Begriff Betriebsparameter 5 durch "Ist-Betriebsparameter 5A und/oder konvertierter Ist-Betriebsparameter 5B und/oder Soll-Betriebsparameter 5C" ersetzt werden, wenn dem technisch nichts entgegensteht.

Der konvertierte Ist-Betriebsparameter 5B kann einem Vergleich mit dem Soll-Betriebsparameter 5A alternativ oder zusätzlich zugrunde gelegt werden. Die Verwendung des konvertierten Ist-Betriebsparameters 5B ist bevorzugt, jedoch nicht zwingend. Daher werden der Ist-Betriebsparameter 5A und der konvertierte Ist-Betriebsparameter 5B fortan als Ist-Betriebsparameter 5A, 5B bezeichnet, wenn sich Erläuterungen entweder auf den Ist-Betriebsparameter 5A, den konvertierten Ist-Betriebsparameter 5B oder beide beziehen. Details zur Konversion des Ist-Betriebsparameters 5A zum konvertierten Ist-Betriebsparameter 5B werden später erläutert.

Dem Antriebsregler 4 ist, insbesondere über einen Betriebsparametereingang 6, der Soll-Betriebsparameter 5C (Sollwert für den Betriebsparameter 5) vorgegeben oder vorgebbar. Der Antriebsregler 4 kann den Soll-Betriebsparameter 5C mit einem den aktuellen Betriebszustand des Elektromotors 3 repräsentierenden Ist-Betriebsparameter 5A, 5B in Bezug gesetzt bzw. verglichen werden, um auf dieser Basis den Ist-Betriebsparameter 5A, 5B dem Soll-Betriebsparameter 5C anzunähern.

Dem vorschlagsgemäßen Antriebsregler 4 ist ein veränderbarer Dynamikparameter 8 vorgegeben. Hierzu weist der Antriebsregler 4 vorzugsweise einen Dynamikparametereingang 7 auf. Über den Dynamikparametereingang 7 kann dem Antriebsregler 4 der Dynamikparameter 8 vorgegeben werden, der vorschlagsgemäß Einfluss auf das Regelverhalten des Antriebsreglers 4 hat.

Vorgesehen ist hierbei, dass durch Änderung des Dynamikparameters 8 das Regelverhalten des Antriebsreglers 4 geändert wird, wie im Folgenden noch näher erläutert wird.

Der Antriebsregler 4 ist vorzugweise dazu ausgebildet, dass sich durch Änderung des Dynamikparameters 8 sein durch eine Änderung einer Last oder eines Soll-Betriebsparameters 5C des Elektromotors 3 hervorrufbares Regelverhalten ändert.

Der Antriebsregler 4 ist vorzugweise dazu ausgebildet, dass durch Änderung des Dynamikparameters 8 die Nachregelung mindestens eines Ist-Betriebsparameters 5A, 5B des Elektromotors 3 verändert wird.

Der Ist-Betriebsparameter 5A, 5B korrespondiert vorzugsweise zu einer Stellgröße 9 des Elektromotors 3, insbesondere zu einem elektrischen Strom zum Antrieb 1 des Elektromotors 3.

Der Antriebsregler 4 ist vorzugsweise dazu ausgebildet, den Ist-Betriebsparameter 5A, 5B in Abhängigkeit von dem Dynamikparameter 8 unterschiedlich schnell bzw. mit unterschiedlicher Regelgeschwindigkeit nachzuregeln.

Hierbei kann die unterschiedlich schnelle Nachregelung mittels eines durch den Dynamikparameter 8 veränderten Verstärkungsfaktors 10 in einer Übertragungsfunktion 11 des Antriebsreglers 4 realisiert werden oder sein.

Der Verstärkungsfaktor 10 kann ein Koeffizient einer Übertragungsfunktion 11 des Antriebsreglers 4 sein oder diesen beeinflussen. So ist es möglich, dass der Verstärkungsfaktor 10 bei einem bevorzugten PID-Regler einen oder mehrere der Koeffizienten KP, KI und/oder KD bildet oder beeinflusst. Bei Einsatz eines anderen Reglerkonzepts wird/werden vorzugweise ein oder mehrere entsprechende Koeffizienten durch den Verstärkungsfaktor 10 beeinflusst oder gebildet.

Der Antriebsregler 4 kann aufgrund einer Änderung des Dynamikparameters 8 den Ist-Betriebsparameter 5A, 5B dem Soll-Betriebsparameter 5C des Elektromotors 3 schneller oder langsamer annähern.

Der Antriebsregler 4 kann vor und nach Änderung des Dynamikparameters 8 den Ist-Betriebsparameter 5A, 5B des Elektromotors 3 unterschiedlich nachführen. Dies kann so erfolgen, dass auf eine durch eine gleichartige Änderung der Last des Elektromotors 3 hervorgerufene gleichartige Änderung des Betriebszustands des Elektromotors 3 eine dem veränderten Dynamikparameter 8 entsprechend abweichende (schnellere oder langsamere) Änderung des Ist-Betriebsparameters 5A, 5B zur Kompensation der Änderung des Betriebszustands des Elektromotors 3 bewirkt wird.

Die Änderung des Betriebszustands kann ein geänderter, vom Elektromotor 3 zu überwindender mechanischer (dem Wiederherstellen einer ursprünglichen Drehzahl) entgegenstehender Widerstand, ein dem Erreichen einer Position oder Positionsänderung des Rotors entgegenstehender Widerstand, eine Drehzahländerung des Elektromotors 3 und/oder eine Positionsänderung des Elektromotors 3 sein oder aufweisen.

Insbesondere gibt der Dynamikparameter 8 eine Rotor-Drehmoment-Änderungs-Charakteristik vor. Mit anderen Worten gibt der Dynamikparameter 8 vor, in welcher Art und Weise (Charakteristik) und insbesondere mit welcher Geschwindigkeit der Antriebsregler 4 eine Änderung des Rotor-Drehmoments, also des Drehmoments des Rotors des Elektromotors 3, bewirkt.

Die Rotor-Drehmoment-Änderungs-Charakteristik kann durch Änderung des Dynamikparameters 8 entweder in eine Richtung verändert werden, in der die Änderung des Rotor-Drehmoments eine geringere Änderungsrate hat als zuvor, das Drehmoment (bzw. der Ist-Betriebsparameter 5A, 5B) also langsamer geändert, angepasst und/oder nachgeführt wird. Alternativ kann durch Änderung des Dynamikparameters 8 die Charakteristik derart verändert werden, dass die Änderungsrate des Rotor-Drehmoments (bzw. des Ist-Betriebsparametes 5A, 5B) vergrößert wird, das Rotor-Drehmoment (bzw. der Ist-Betriebsparametes 5A, 5B) also schneller geändert, angepasst und/oder nachgeführt wird.

In Abhängigkeit vom Dynamikparameter 8 ergibt sich also, insbesondere beim Anlaufverhalten, bei Lastwechseln oder bei Änderung einer Betriebszustandsvorgabe und insbesondere einer Drehzahlvorgabe (oder allgemeiner des Soll-Betriebsparameters 5C), eine veränderte Änderungsrate bzw. Änderungsgeschwindigkeit des Rotor-Drehmoments (oder allgemeiner des Ist-Betriebsparameters 5A, 5B).

Bei einer geringeren Änderungsrate des Rotor-Drehmoments (oder allgemeiner des Ist-Betriebsparameters 5A, 5B) läuft der Rührer 121 vorzugsweise schleichend an oder passt sich schleichend einer geänderten Randbedingung, wie einer geänderten Betriebszustandsvorgabe (Soll-Betriebsparameter 5C) oder einer geänderten Last, an. Im Kontext der vorschlagsgemäßen Küchenmaschine 100 ergibt sich hierdurch eine schonende Rührbewegung des Rührers 121.

Bei einer stattdessen höheren Änderungsrate des Rotor-Drehmoments (oder allgemeiner des Ist-Betriebsparameters 5A, 5B) läuft der Rührer 121 vorzugsweise abrupter bzw. weniger schleichend an oder passt sich abrupter bzw. weniger schleichend einer geänderten Randbedingung, wie einer geänderten Betriebszustandsvorgabe (Soll-Betriebsparameter 5C) oder einer geänderten Last an als bei einer niedrigeren Änderungsrate. Deshalb neigt der Rührer 121 bei der höheren Änderungsrate stärker zum Zerkleinern bzw. Zerschlagen.

Vorzugsweise korrespondiert der Betriebsparameter 5 zu einer, bevorzugt das Drehmoment des Elektromotors 3 beeinflussenden, Stellgröße 9 des Elektromotors 3. Mit anderen Worten bewirkt die Stellgröße 9 einen bestimmten Betriebszustand des Elektromotors 3 und damit den Ist-Betriebsparameter 5A.

Die Stellgröße 9 gibt vorzugsweise das Drehmoment des Elektromotors 3 vor bzw. bewirkt es. Die Stellgröße 9 kann als Antriebsregler-Stellgröße 9A vom Antriebsregler 4 bereitgestellt und vorzugsweise zu einer konvertierten Stellgröße 9B konvertiert und zu einer Versorgungs-Stellgröße 9C zur Versorgung des Elektromotors 3 verwendet werden. Dabei korrespondieren die Antriebsregler-Stellgröße 9A, die konvertierte Stellgröße 9B und die Versorgungs-Stellgröße 9C zueinander und werden daher auch schlicht als Stellgröße 9 bezeichnet.

Bevorzugt handelt es sich bei der Stellgröße 9 bzw. Versorgungs-Stellgröße 9C um einen elektrischen Strom zum Antrieb des Elektromotors 3 oder um einen zum Strom korrespondierenden Parameter (Antriebsregler-Stellgröße 9A, konvertierte Stellgröße 9B), der diesen elektrischen Strom vorgibt oder von dem dieser elektrische Strom abgeleitet wird oder ist.

Der elektrische Strom ist weiter bevorzugt ein mehrphasiger Strom, insbesondere ein Drehstrom, beispielsweise mit drei Phasen U, V und W. Die Stellgröße 9 kann jedoch alternativ oder zusätzlich, insbesondere entsprechend dem jeweiligen Elektromotorenkonzept, einen anders konfigurierten Strom bzw. anderen Parameter vorgeben oder bilden.

Der Antriebsregler 4 regelt den Betriebsparameter 5, insbesondere also den Ist-Betriebsparameter 5A, 5B, in Abhängigkeit von dem Dynamikparameter 8 vorzugsweise unterschiedlich schnell nach oder ist hierzu ausgebildet.

Die Regelung erfolgt bevorzugt mit einem in Abhängigkeit vom Dynamikparameter 8 veränderten bzw. veränderbaren Verstärkungsfaktor 10 in der Übertragungsfunktion 11 des Antriebsreglers 4. Bei Änderung des Dynamikparameters 8 kann ein Istwert, insbesondere der Ist-Betriebsparameter 5A, 5B, einem Sollwert, insbesondere dem Soll-Betriebsparameter 5C, schneller oder langsamer angenähert wird. Der Dynamikparameter 8 gibt also letztlich die Dynamik, Trägheit bzw. Regelgeschwindigkeit der Antriebsregelung mittels des Antriebsreglers 4 vor und ermöglicht hierbei eine Variation dieser.

So ist es vorgesehen, dass letztlich vor und nach Änderung des Dynamikparameters 8 der Betriebsparameter 5 des Elektromotors 3 unterschiedlich nachgeführt wird. Hierdurch kann eine durch eine gleichartige Änderung der Last des Elektromotors 3 hervorgerufene Änderung des Ist-Betriebsparameters 5A, 5B, beispielsweise der Drehzahl und/oder Position, bzw. eine durch eine gleichartige Änderung der Last des Elektromotors 3 hervorgerufene Abweichung des Ist-Betriebsparameters 5A, 5B von dem Soll-Betriebsparameter 5C zum veränderten Dynamikparameter 8 korrespondierend verändert (schnell) kompensiert werden oder der Antriebsregler 4 ist dazu ausgebildet. Bei der Änderung der Last kann es sich um einen geänderten, vom Elektromotor 3 zu überwindenden mechanischen Widerstand handeln oder die Änderung der Last kann hierdurch hervorgerufen oder hervorrufbar sein.

Bei der Betriebszustandsänderung kann es sich alternativ oder zusätzlich um eine geänderte Drehzahl des Elektromotors 3 handeln oder die Betriebszustandsänderung kann hierdurch hervorgerufen oder hervorrufbar sein.

Bei der Betriebszustandsänderung kann es sich alternativ oder zusätzlich um eine geänderte Position (geänderte Positionsvorgabe / Positionsänderung) des Elektromotors 3 handeln oder die Betriebszustandsänderung kann hierdurch hervorgerufen oder hervorrufbar sein.

Durch die Änderung des Dynamikparameters 8 kann also ein geänderter, dem Wiederherstellen einer ursprünglichen Drehzahl des Elektromotors 3 entgegenstehender Widerstand und/oder ein einem Erreichen einer bestimmten Position oder einer Positionsänderung eines Rotors des Elektromotors 3 entgegenstehender Widerstand mit einer veränderten Geschwindigkeit kompensiert werden.

Eine Laständerung des Elektromotors 3 kann dadurch hervorgerufen sein oder werden, dass bei der Küchenmaschine 100 der Rührer 121 und durch die bestehende Kopplung auch der Motor 3 bzw. dessen Rotor stärker oder weniger stark abgebremst wird, beispielsweise dadurch, dass das Produkt 14 oder eine Zutat hierfür dem Zubereitungsgefäß 120 zugeführt und einer vom Elektromotor 3 hervorgerufene oder hervorrufbare Bewegung des Rührers 121 mehr oder weniger entgegenwirkt.

Letztendlich bewirkt die Änderung des Dynamikparameters 8 vorzugsweise eine entsprechende Änderung eines Verstärkungsfaktors 10 der Übertragungsfunktion 11 des Antriebsreglers 4. Entsprechend wird durch den Dynamikparameter 8 die Regeldynamik / Regelgeschwindigkeit vorgegeben und damit im Zusammenhang mit der vorschlagsgemäßen Küchenmaschine 100 das Rührverhalten des Rührers 121.

Wie in Fig. 1 schematisch dargestellt, kann eine Datenbank 12 vorgesehen sein, die in der Küchenmaschine 100 vorgesehen oder ein körperlich getrennter, mit der Küchenmaschine 100 gekoppelter oder koppelbarer Teil der Küchenmaschine 100 ist oder bildet. Die Datenbank 12 ist beispielsweise als externer Server, durch eine Cloud, als oder mit einem Cloudspeicher und/oder auf einer mobilen Benutzerschnittstelle, wie einer App, und/oder auf einem mobilen Endgerät, wie einem Smartphone, realisiert.

Die Datenbank 12 weist vorzugsweise Rezepte 13 zur Steuerung des Antriebs 1, des Rührwerks 2 bzw. der Küchenmaschine 100 auf.

Die Rezepte 13 können einen oder mehrere über einem zeitlichen Verlauf veränderliche Parameter zur Steuerung der Küchenmaschine 100 aufweisen. Mit anderen Worten ist ein Rezept 13 ein Programmablauf oder weist einen solchen auf. Nach Auswahl und Start des Rezepts 13 wird dann die Küchenmaschine 100 entsprechend dieser Parameter gesteuert.

Neben einer Drehzahlvorgabe für den Elektromotor 3 bzw. den hiermit antreibbaren Rührer 121 der Küchenmaschine 100 kann das jeweilige Rezept 13 auch weitere Vorgaben, wie Vorgaben für eine Temperatur/Temperierung, aufweisen. Maßgeblich für die vorliegende Erfindung ist hingegen insbesondere ein Drehzahlverlauf, der im Zuge eines in der Datenbank 12 hinterlegten Rezepts 13 die ggf. über die Zeit veränderliche Vorgabe des Soll-Betriebsparameters 5C bewirkt.

Das Rezept 13 weist vorzugsweise auch den Dynamikparameter 8 auf. Dieser kann in unterschiedlichen Rezepten 13 unterschiedlich sein.

Der Dynamikparameter 8 kann im zeitlichen Verlauf eines Rezepts 13 variieren. Ein Rezept 13 kann also einen zeitlichen Verlauf eines über diesen Verlauf veränderlichen Dynamikparameters 8 aufweisen. Beispielsweise ist in dem Rezept 13 in einer ersten Phase bzw. in einem ersten Zubereitungsschritt des im Rezept 13 definierten Programmablaufs der Dynamikparameter 8 anders als in einer anderen, zweiten Phase bzw. in einem anderen, zweiten Zubereitungsschritt. Hierdurch kann in den Phasen bzw. Zubereitungsschritten entsprechend der Dynamikparameter 8 die Antriebsregelung unterschiedlich dynamisch erfolgen.

Es ist bevorzugt, dass die Küchenmaschine 100 über die Datenbank 12 zur Steuerung des Antriebs 1 ausgebildet ist. Hierbei sind vorzugsweise unterschiedliche Dynamikparameter 8 jeweils Rezepten 13 und/oder zu verarbeitenden Produkten 14 zugeordnet.

Die Küchenmaschine 100 ist vorzugsweise dazu ausgebildet, bei Steuerung der Küchenmaschine 100 basierend auf einem der Rezepte 13 oder bei Vorgabe der Verarbeitung eines der Produkte 14 dem Antriebsregler 4 den jeweils zugeordneten, insbesondere geänderten Dynamikparameter 8 vorzugeben.

Unterschiedliche Rezepte 13 können und/oder ein Rezept 13 kann je nach Phase bzw. Zubereitungsschritt des Zubereitungsvorgangs unterschiedliche Dynamikparameter 8 aufweisen und diese werden dann zu der jeweiligen Phase bzw. für den jeweiligen Zubereitungsschritt dem Antriebsregler 4 vorgegeben, woraufhin dieser sein Regelverhalten entsprechend ändert.

Es ist also bevorzugt, dass das Rezept 13 einen zeitlichen Verlauf des Dynamikparameters 8 aufweist, wobei sich der Dynamikparameter 8 oder sein Verlauf unterschiedlicher Rezepte 13 voneinander abweicht.

Alternativ oder zusätzlich zu einer auf dem Rezept 13 basierten Vorgabe des Soll-Betriebsparameters 5C und des Dynamikparameters 8 kann/können der Soll-Betriebsparameter 5C und/oder der Dynamikparameter 8 auch anderweitig, insbesondere durch einen Befehl 16, vorgebbar sein, der durch die Eingabeeinrichtung 15 eingebbar oder eingegeben sein kann.

Die Eingabeeinrichtung 15 kann dazu ausgebildet sein oder verwendet werden, dem Antriebsregler 4 bzw. dem Dynamikparametereingang 7 den Dynamikparameter 8 direkt oder durch Auswahl eines Rezepts 13 vorzugeben oder zu ändern.

Alternativ oder zusätzlich kann die Eingabeeinrichtung 15 dazu ausgebildet sein oder verwendet werden, dem Antriebsregler 4 bzw. dem Betriebsparametereingang 6 einen Betriebsparameter 5 (Soll-Betriebsparameter 5C) direkt oder durch Auswahl eines Rezepts 13 vorzugeben oder zu ändern.

Die Eingabeeinrichtung 15 ist vorzugsweise dazu ausgebildet, einen Befehl 16, insbesondere durch eine Benutzereingabe, zu empfangen.

Die Eingabeeinrichtung 15 kann ein Eingabemittel 15A zur Vorgabe einer Geschwindigkeit (Umdrehungszahl) und/oder Position, insbesondere als Soll-Betriebsparameter 5C oder Teil hiervon, aufweisen. Alternativ oder zusätzlich kann die Eingabeeinrichtung 15 ein Eingabemittel 15B zur Vorgabe eines kontinuierlichen oder intervallartigen Modus, insbesondere als Soll-Betriebsparameter 5C oder Teil hiervon, vorgeben. Grundsätzlich ist die Vorgabe der Geschwindigkeit bzw. Position und, vorzugsweise, des Modus jedoch auch durch Wahl eines Rezepts 13 möglich, wobei auch das Rezept 13 grundsätzlich über die Eingabeeinrichtung 15 ausgewählt werden und/oder den Soll-Betriebsparameter 5C oder einen Teil hiervon definieren kann.

Eingabeeinrichtung 15 kann in diesem Zusammenhang dazu ausgebildet sein, die bevorzugt manuelle Benutzereingabe als Befehl 16 zu interpretieren bzw. in einen Befehl 16 zu wandeln. Der Befehl 16 kann den Betriebsparameter 5, insbesondere den Soll-Betriebsparameter 5C, unmittelbar oder mittelbar, insbesondere über ein Rezept 13, vorgeben.

Die vorschlagsgemäße Eingabeeinrichtung 15 ermöglicht vorzugsweise die Vorgabe bzw. Änderung der Dynamik des Antriebs 1 bzw. des Dynamikparameters 8.

Die Eingabeeinrichtung 15 kann zur Vorgabe bzw. Änderung des Dynamikparameters 8 ein Eingabemittel 15C zur Vorgabe der Dynamik in Bezug auf eine Positionsregelung aufweisen, wobei die Regelung des Antriebsreglers 4 mit dem durch das Eingabemittel 15C vorgegebene Dynamikparameter 8 bestimmt oder verändert wird und der Antriebsregler 4 den Elektromotor 3 entsprechend unter Berücksichtigung dieses Dynamikparameters 8 auf die vorgegebene Position regelt. Durch Eingabe des Dynamikparameters 8 mit dem Eingabemittel 15C kann der am Dynamikparametereingang 7 des Antriebsreglers 4 vorgegebene Dynamikparameter 8 entsprechend angepasst werden.

Alternativ oder zusätzlich kann die Eingabeeinrichtung 15 ein Eingabemittel 15D zur Vorgabe einer Dynamik für eine Geschwindigkeit (Umdrehungszahl) des Elektromotors 3 bzw. Rührers 121 aufweisen, wobei die Regelung des Antriebsreglers 4 mit dem durch das Eingabemittel 15D vorgegebene Dynamikparameter 8 bestimmt oder verändert wird und der Antriebsregler 4 den Elektromotor 3 entsprechend unter Berücksichtigung dieses Dynamikparameters 8 auf die vorgegebene Geschwindigkeit regelt. Durch Eingabe des Dynamikparameters 8 mit dem Eingabemittel 15D kann der am Dynamikparametereingang 7 des Antriebsreglers 4 vorgegebene Dynamikparameter 8 entsprechend angepasst werden.

Alternativ oder zusätzlich kann ein Eingabemittel 15E vorgesehen sein, um die Dynamik bzw. den Dynamikverlauf des Antriebsreglers 4 individuell vorzugeben. Hierbei wird vorzugsweise ein Dynamikparameter 8 bzw. ein Verlauf für diesen über das Eingabemittel 15E eingegeben oder ist eingebbar, sodass dieser Dynamikparameter 8 bzw. sein Verlauf im Folgenden am Dynamikparametereingang 7 anliegt oder angelegt wird, während die Küchenmaschine 100 den Rührer 121 zur Verarbeitung bzw. Herstellung des Produkts 14 regelt. Dies kann abhängig oder unabhängig vom Antriebsmodus erfolgen.

Die Eingabeeinrichtung 15 kann also dazu ausgebildet sein, dem Antriebsregler 4, vorzugsweise zusätzlich zu dem über den Betriebsparametereingang 6 an den Antriebsregler 4 übertragenen oder übertragbaren Soll-Betriebsparameter 5C den Dynamikparameter 8 am Dynamikparametereingang 7 des Antriebsreglers 4 vorzugeben.

Es versteht sich, dass der Soll-Betriebsparameter 5C und/oder der Dynamikparameter 8 bzw. ein diesbezüglicher Verlauf alternativ oder zusätzlich durch Auswahl oder Eingabe eines Rezepts 13 mittels der Eingabeeinrichtung 15, insbesondere an dem Betriebsparametereingang 6 bzw. Dynamikparametereingang 7, vorgegeben werden können.

Es ist also insbesondere möglich, dass aus der Datenbank 12 durch Eingabe mittels der Eingabeeinrichtung 15 ein Rezept 13 ausgewählt und von der Basisstation 110 abgerufen oder dahin übermittelt werden kann, auf dessen Basis dann der Soll-Betriebsparameter 5C und/oder der Dynamikparameter 8 dem Antriebsregler 4 vorgegeben wird/werden.

Der Antriebsregler 4 weist vorzugsweise eine Steuerungseinrichtung 17 zur Steuerung des Elektromotors 3 bzw. seines Betriebsparameters 5 auf. Die Steuerungseinrichtung 17 weist vorzugsweise die Übertragungsfunktion 11 auf, deren Verstärkungsfaktor 10 vorzugsweise die Dynamik der Regelung des Elektromotors 3 beeinflusst oder vorgibt. Es ist besonders bevorzugt, dass der Verstärkungsfaktor 10 der Übertragungsfunktion 11 durch den vorgegebenen oder vorgebbaren Dynamikparameter 8 bestimmt oder beeinflusst wird oder ist, wie bereits erläutert.

Die Steuerungseinrichtung 17 bildet vorzugsweise mit dem Elektromotor 3 einen Regelkreis zur Regelung seines Betriebsparameters 5. Hierzu findet vorzugsweise ein Vergleich statt zwischen dem Ist-Betriebsparameter 5A, 5B, der mit einer dem Elektromotor 3 zugeordneten Messeinrichtung 20 ermittelt werden kann, und dem Soll-Betriebsparameter 5C, der dem Antriebsregler 4 bevorzugt über den Betriebsparametereingang 6 vorgegeben oder vorgebbar sein kann.

Insbesondere wird eine Differenz zwischen dem Ist-Betriebsparameter 5A, 5B und dem Soll-Betriebsparameter 5C als Regelabweichung mittels der Übertragungsfunktion 11 verarbeitet. Als Ergebnis wird unmittelbar oder mittelbar die, bevorzugt das Drehmoment des Elektromotors 3 beeinflussende, Stellgröße 9, wie sein Motorstrom, bestimmt.

Der Antriebsregler 4 bzw. der durch den Antriebsregler 4 gebildete Regelkreis kann eine Konversionseinrichtung 18 aufweisen, die das durch die Übertragungsfunktion 11 gebildete Ergebnis konvertieren kann. Insbesondere handelt es sich hierbei um eine Konversion von Koordinaten zwecks Bereitstellung eines oder mehrerer Ströme als Stellgröße 9.

Die Konversionseinrichtung 18 weist vorzugsweise ein erstes Transformationsmodul 18A, ein Zuordnungsmodul 18B und/oder ein zweites Transformationsmodul 18C auf.

Mit dem ersten Transformationsmodul 18A kann das Ergebnis der Übertragungsfunktion 11 bzw. ein Ausgangssignal des Antriebsreglers 4 in Vorgaben für die Stellgröße 9, also bevorzugt für einen oder mehrere Ströme, gewandelt werden. Grundsätzlich sind jedoch auch andere Konversionen möglich.

Das erste Transformationsmodul 18A kann dazu ausgebildet sein oder verwendet werden, das mit der Übertragungsfunktion 11 gebildete Ergebnis aus Raumkoordinaten in Vektorkoordinaten zu überführen. Es handelt sich also vorzugsweise um einen sogenannten Space-Vector-Modulator. Insbesondere kann die Konversionseinrichtung 18 bzw. das erste Transformationsmodul 18A diesen aufweisen.

Das Zuordnungsmodul 18B kann dazu ausgebildet sein oder verwendet werden, das in Vektorkoordinaten transformierte Ergebnis aus der Übertragungsfunktion 11 bzw. dem Antriebsregler 4 für eine Versorgungseinrichtung 19 vorzuverarbeiten. Insbesondere erfolgt durch das Zuordnungsmodul 18B eine Zuordnung zu einem oder mehreren Schaltern oder Schaltvorgängen in der Versorgungseinrichtung 19, insbesondere zur Vorgabe eines oder mehrerer Ströme zum Betrieb des Elektromotors 3.

Schließlich kann das (optionale) zweite Transformationsmodul 18C dazu ausgebildet sein oder verwendet werden, ein Pulsweitenmodulations(PWM)-Signal zu erzeugen, und zwar bevorzugt auf Basis des mit dem ersten Transformationsmodul 18A transformierten und/oder mittels des Zuordnungsmoduls 18B zugeordneten Ergebnisses aus der Übertragungsfunktion 11, sodass der Versorgungseinrichtung 19 ein PWM-Signal zugeführt wird bzw. werden kann.

Die Verwendung der vorschlagsgemäßen Konversionseinrichtung 18 hat sich als besonders vorteilhaft in Kombination mit der durch den Dynamikparameter 8 ermöglichten Anpassung bzw. Anpassbarkeit der Übertragungsfunktion 11 gezeigt. Insbesondere lässt sich bei Einsatz der Konversionseinrichtung 18 eine besonders präzise Steuerung des Elektromotors 3 und entsprechend besonders präzise Berücksichtigung der Dynamikanpassung mittels des Dynamikparameters 8 realisieren.

Bei der Versorgungseinrichtung 19 handelt es sich vorzugsweise um einen Inverter zur Erzeugung eines oder mehrerer Elektromotorströme bzw. zur Erzeugung einer sonstigen Stellgröße 9 zum Betrieb des Elektromotors 3.

Die Versorgungseinrichtung 19 kann ein erstes Versorgungsmodul 19A, ein zweites Versorgungsmodul 19B und/oder ein drittes Versorgungsmodul 19C aufweisen.

Beim ersten Versorgungsmodul 19A handelt es sich vorzugsweise um eine sogenannte Power Supply Unit (PSU), vorzugsweise aufweisend einen DC-Link. Die PSU stellt grundsätzlich ein oder mehrere Signale zur Erzeugung für den Betrieb des Elektromotors 3 benötigter Ströme oder einer sonstigen, bevorzugt das Drehmoment des Elektromotors 3 beeinflussende Stellgröße 9 zur Verfügung. Der oder die Ströme werden vorzugsweise korrespondierend zu dem insbesondere mit der Konversionseinrichtung 18 konvertierten Ergebnis der Übertragungsfunktion 11 gebildet.

Das zweite Versorgungsmodul 19B ist vorzugsweise zur Anpassung der Signale des Versorgungsmoduls 19A ausgebildet.

Das dritte Versorgungsmodul 19C ist vorzugsweise eine Einrichtung zur physikalischen Erzeugung der Stellgröße 9, also insbesondere eines oder mehrerer Ströme, zum unmittelbaren Betrieb, also zur unmittelbaren Steuerung und/oder unmittelbaren Energieversorgung des Elektromotors 3.

Das dritte Versorgungsmodul 19C ist vorzugsweise dazu ausgebildet, Ausgangssignale des ersten und/oder zweiten Versorgungsmoduls 19A, 19B in einen oder mehrere entsprechende Ströme zu wandeln. Hierbei kann es sich um eine Brückenschaltung und besonders bevorzugt um eine Sechs-Puls-Brückenschaltung handeln oder das dritte Versorgungsmodul 19C kann eine solche aufweisen.

Im Ergebnis kann ein der Versorgungseinrichtung 19 von der Übertragungsfunktion 11 bzw. vom Antriebsregler 4 zugeführtes und bevorzugt durch die Konversionseinrichtung 18 konvertiertes Signal in die Stellgröße 9 gewandelt werden.

Es ist zwar besonders bevorzugt, dass sowohl das erste Versorgungsmodul 19A als auch das zweite Versorgungsmodul 19B sowie das dritte Versorgungsmodul 19C insbesondere in dieser Reihenfolge sukzessive das eingehende Signal in die Stellgröße 9 wandeln.

Die Versorgungseinrichtung 19 kann jedoch auch anderweitig aufgebaut sein, mit bevorzugt zumindest einem der Module 19A-19C, weiter bevorzugt mindestens zweier der Module 19A-19C, wie in Fig. 1 dargestellt.

Die Stellgröße 9 wird vorzugsweise zum Elektromotor 3 geleitet, um diesen mit Energie zu versorgen und hierdurch zu steuern. Wie bereits erwähnt, handelt es sich bei der Stellgröße 9 vorzugsweise um einen oder mehrere Ströme zum Antrieb des Elektromotors 3. Grundsätzlich kann die Stellgröße 9 jedoch auch eine oder mehrere Spannungen oder eine sonstige, vorzugsweise das Drehmoment des Elektromotors 3 beeinflussende Größe sein oder aufweisen.

Vorzugsweise wird der Ist-Betriebsparameter 5A, 5B des Elektromotors 3 ermittelt und der Regelung des Elektromotors 3 zugrunde gelegt.

Vorzugsweise wird die Stellgröße 9, also insbesondere der/die Motorströme als Ist-Betriebsparameter 5A, 5B gemessen. Dies kann durch eine dem Elektromotor 3 zugeordnete und insbesondere vorgeschaltete Messeinrichtung 20 erfolgen.

Alternativ oder zusätzlich ist dem Elektromotor 3 eine zweite Messeinrichtung 21 zugeordnet. Die zweite Messeinrichtung 21 kann dazu ausgebildet sein, eine Rotorposition des Elektromotors 3 zu ermitteln und als Ist-Betriebsparameters 5A oder Teil hiervon auszugeben.

Der Ist-Betriebsparameter 5A, 5B kann also die Stellgröße 9 oder einem hierzu korrespondierenden Wert und/oder eine Positionsinformation des Rotors des Elektromotors 3 sein oder aufweisen. Beispielsweise weist der Ist-Betriebsparameter 5A, 5B sowohl Strom- als auch Positionsinformationen des Elektromotors 3 auf.

Gemäß einem auch unabhängig realisierbaren Aspekt der vorliegenden Erfindung kann von einer Messung der Positionsinformationen und/oder von der zweiten Messeinrichtung 21 abgesehen werden. Insbesondere wird ausschließlich die erste Messeinrichtung 20 zur Messung des Ist-Betriebsparameters 5A, 5B verwendet. Der Ist-Betriebsparameter 5A, 5B ist also (ausschließlich) durch eine gemessene oder messbare Strominformation des Elektromotors 2 gebildet.

In einer Weiterentwicklung kann vorgesehen sein, dass aus der Strominformation, die mit der ersten Messeinrichtung 20 gewonnen werden kann, die Positionsinformation abgeleitet wird, sodass vom Einsatz der zweiten Messeinrichtung 21 abgesehen werden kann.

Alternativ kann eine Regelung auch lediglich auf Basis eines Ist-Betriebsparameters 5A erfolgen, der keine Positionsinformationen enthält, sondern (ausschließlich) die (gemessene) Stellgröße 9, also insbesondere ein oder mehrere Elektromotorströme. Die zumindest ergänzende Verwendung der mittels der zweiten Messeinrichtung 21 messbaren oder aus der Stellgröße 9 abgeleiteten Positionsinformationen des Rotors des Elektromotors 3 hat sich hingegen als besonders vorteilhaft für eine exakte Regelung des Elektromotors 3 erwiesen.

Der Ist-Betriebsparameter 5A, 5B wird vorzugsweise mit dem Soll-Betriebsparameter 5C verglichen und das Ergebnis der Übertragungsfunktion 11 bzw. der Steuerungseinrichtung 17 zugrunde gelegt, um letztlich die Stellgröße 9 zu ermitteln und den Elektromotor 3 mit dieser zu betreiben bzw. zu steuern.

Der Ist-Betriebsparameter 5A kann konvertiert werden und als konvertierter Ist-Betriebsparameter 5B der weiteren Regelung zugrunde gelegt werden, wie bereits eingangs erwähnt.

Der konvertierte Ist-Betriebsparameter 5B kann aus dem Ist-Betriebsparameter 5A mittels einer Rückkopplungseinrichtung 22 erzeugt werden. Die Rückkopplungseinrichtung 22 ist hierbei dazu ausgebildet, den bevorzugt unmittelbar zum Betrieb des Elektromotors 3 korrespondierenden oder am Elektromotor 3 mit einem Sensor erfassten Ist-Betriebsparameter 5A zu dem konvertierten Ist-Betriebsparameter 5B zu verarbeiten.

Die Rückkopplungseinrichtung 22 kann ein Transformationsmodul 22A aufweisen. Das Transformationsmodul 22A ist dazu ausgebildet oder wird verwendet, den Ist-Betriebsparameter 5A zwecks Ermittlung des konvertierten Ist-Betriebsparameters 5B zu transformieren.

Der Ist-Betriebsparameter 5A ist vorzugsweise durch einen oder mehrere Parameter eines Strom-Mehrphasensystems gebildet oder weist diese auf, vorzugsweise mit einer Anzahl von Achsen, die den Phasen entspricht, insbesondere eines Drei-Phasensystems mit den Koordinaten U, V und W. Bevorzugt handelt es sich bei der Transformation um eine Wandlung in ein zweiachsiges Koordinatensystem, auch als dq- oder Park-Transformation bezeichnet. Die Transformation kann auch auf Basis der Positionsinformation als Ist-Betriebsparameter 5A erfolgen, wobei die Transformation direkt oder auf Basis von aus der Positionsinformation abgeleiteten Parametern des Mehrphasensystems erfolgen kann.

Alternativ oder zusätzlich weist die Rückkopplungseinrichtung 22 ein Flussmodul 22B zur Berechnung eines oder mehrerer (magnetischer) Flüsse des Elektromotors 3 auf. Mit dem Flussmodul 22B kann der konvertierte Ist-Betriebsparameter 5B hinsichtlich eines oder mehrerer magnetischer Flüsse des Elektromotors 3 korrigiert sein oder werden.

Alternativ oder zusätzlich weist die Rückkopplungseinrichtung 22 ein Geschwindigkeitsmodul 22C auf, mit dem auf Basis des Ist-Betriebsparameters 5A eine Geschwindigkeit des Elektromotors 3 berechnet wird oder werden kann. Entsprechend kann der konvertierte Ist-Betriebsparameter 5B eine Geschwindigkeit des Elektromotors 3 sein oder aufweisen. Dies kann die Ermittlung einer Winkelgeschwindigkeit auf Basis einer Position bzw. Positionsänderung umfassen.

Der Antrieb 1 bzw. der Antriebsregler 4 kann/können eine Überwachungseinrichtung 23 aufweisen, die insbesondere auf Basis oder unter Berücksichtigung des Ist-Betriebsparameters 5A bzw. des konvertierten Ist-Betriebsparameters 5B oder hiervon abgeleiteter Stellgrößen 9 Betriebseigenschaften des Elektromotors 3 ermittelt und/oder überwacht. Das Überwachungsergebnis kann an die Steuerungseinrichtung 17 übergeben werden und, vorzugsweise, von dieser zwecks Regelung des Elektromotors 3 berücksichtigt werden.

Die Überwachungseinrichtung 23 weist vorzugsweise ein Betriebsparametermodul 23A auf, das zur Bestimmung, insbesondere zur Berechnung, eines oder mehrerer Betriebsparameter 5 des Elektromotors 3 ausgebildet ist oder hierzu verwendet wird.

Alternativ oder zusätzlich weist die Überwachungseinrichtung 23 ein Geschwindigkeitsmodul 23B auf, mit dem auf Basis des Ist-Betriebsparameters 5A, des konvertierten Ist-Betriebsparameters 5B oder einer hiervon abgeleiteten Stellgröße 9 eine Geschwindigkeit bzw. Position des Elektromotors 3 ermittelbar oder ermittelt wird.

Ein Überwachungsergebnis 23C kann entsprechend den berechneten magnetischen Fluss, die berechnete Geschwindigkeit und/oder die berechnete Position oder sonstige Betriebsparameter 5 des Elektromotors 3 sein oder aufweisen.

Das Überwachungsergebnis 23C wird vorzugsweise an die Steuerungseinrichtung 17 übergeben und von dieser bevorzugt für die Regelung des Elektromotors 3 verwendet.

Die Steuerungseinrichtung 17 bildet vorzugsweise die Stellgröße 9 unmittelbar oder mittelbar zur Verarbeitung durch die Konversionseinrichtung 18 und/oder die Versorgungseinrichtung 19.

Die Steuerungseinrichtung 17 kann hierzu den Ist-Betriebsparameter 5A, 5B (Regelgröße) mit dem Soll-Betriebsparameter 5C zu der Stellgröße 9 verarbeiten.

Die Steuerungseinrichtung 17 kann ein bevorzugt kaskadierter Regler sein oder einen solchen aufweisen.

Zunächst weist die Steuerungseinrichtung 17 vorzugsweise die bereits erwähnte Übertragungsfunktion 11 auf, die auf Basis eines Vergleichs des Ist-Betriebsparameters 5A, 5B mit dem Soll-Betriebsparameter 5C unmittelbar oder mittelbar die Stellgröße 9 erzeugt. Das Verhalten der Übertragungsfunktion 11 wird hierbei bevorzugt maßgeblich durch den Verstärkungsfaktor 10 beeinflusst.

Die Steuerungseinrichtung 17 kann eine oder mehrere Module 17A-17D aufweisen, die, bevorzugt kaskadiert, die unmittelbare oder mittelbare Bestimmung der Stellgröße 9 bewirken oder beeinflussen.

Die Steuerungseinrichtung 17 kann ein Stromsteuerungsmodul 17A aufweisen, mit dem eine Vorgabe für einen Strom bestimmt wird, die die Stellgröße 9 unmittelbar oder mittelbar bildet.

Alternativ oder zusätzlich weist die Steuerungseinrichtung 17 ein Feldschwächungsmodul 17B auf, das dazu verwendet wird oder werden kann, die Stellgröße 9 so zu bestimmen oder zu beeinflussen, dass eine vorgegebene Feldschwächung des Elektromotors 3 erfolgt.

Alternativ oder zusätzlich weist die Steuerungseinrichtung 17 ein Geschwindigkeitssteuermodul 17C auf, das eine Geschwindigkeitsregelung ermöglicht oder bewirkt, die die Stellgröße 9 bestimmt oder beeinflusst. Mit dem Geschwindigkeitssteuermodul 17C kann auf Basis eines Geschwindigkeitsvergleichs die Ermittlung der Stellgröße 9 bewirkt oder beeinflusst werden. Hierzu kann das Geschwindigkeitssteuermodul 17C die (konvertierte) Geschwindigkeit des Elektromotors 3, die den oder einen der Ist-Betriebsparameter 5A bzw. der konvertierten Ist-Betriebsparameter 5B bilden kann, mit einem entsprechenden Soll-Betriebsparameter 5C vergleichen, der eine Geschwindigkeit für den Elektromotor 3 vorgibt.

Alternativ oder zusätzlich weist die Steuerungseinrichtung 17 vorzugsweise ein Positionssteuermodul 17D auf, das eine Positionsregelung ermöglicht oder bewirkt, die die Stellgröße 9 bestimmt oder beeinflusst. Mit dem Positionssteuermodul 17D kann auf Basis eines Positionsvergleichs die Ermittlung der Stellgröße 9 bewirkt oder beeinflusst werden. Hierzu kann das Positionssteuermodul 17D die (konvertierte) Position des Elektromotors 3 bzw. seines Rotors, die den oder einen der Ist-Betriebsparameter 5A bzw. der konvertierten Ist-Betriebsparameter 5B bilden kann, mit einem entsprechenden Soll-Betriebsparameter 5C vergleichen, der eine Geschwindigkeit für den Elektromotor 3 vorgibt.

Vorzugsweise ist oder bildet die Steuerungseinrichtung 17 einen kaskadierten Regler. Hierbei wird ein mit dem Stromsteuerungsmodul 17A gebildetes Ergebnis mittelbar oder unmittelbar zur Erzeugung der Stellgröße 9 verwendet oder bildet diese, während ein Ergebnis, das mit dem Feldschwächungsmodul 17B, mit dem Geschwindigkeitssteuerungsmodul 17C und/oder mit dem Positionssteuermodul 17D gebildet wird oder ist, wiederum den Betrieb des Stromsteuerungsmoduls 17A zur Ermittlung der Stellgröße 9 beeinflusst. Weiter beeinflusst vorzugsweise das Ergebnis des Geschwindigkeitssteuerungsmoduls 17C und/oder des Positionssteuermodul 17D das Feldschwächungsmodul 17B.

Vorzugsweise beeinflusst das Positionssteuermodul 17D das Geschwindigkeitssteuermodul 17C. Das Positionssteuermodul 17D und/oder das Geschwindigkeitssteuermodul 17C beeinflusst vorzugsweise das Feldschwächungsmodul 17B. Das Feldschwächungsmodul 17B beeinflusst vorzugsweise das Stromsteuerungsmodul 17A. Auf diese Weise können die Module 17A-17D der Steuerungseinrichtung 17 kaskadiert dazu geeignet sein oder verwendet werden, die Stellgröße 9 zu bestimmen.

Eines oder mehrere der Module 17A-17D kann/können hierzu die Übertragungsfunktion 11, insbesondere den Verstärkungsfaktor 10 und/oder andere Parameter der Übertragungsfunktion 11, bestimmen oder beeinflussen.

Das Stromsteuerungsmodul 17A kann die Übertragungsfunktion 11 aufweisen oder diese beeinflussen, vorzugsweise so, dass die Stellgröße 9 als Vorgabe für einen Strom zum Betrieb des Elektromotors 3 oder ein hierzu korrespondierender Wert ist, der bevorzugt mit der Konversionseinrichtung 18 konvertiert und/oder mit der Versorgungseinrichtung 19 in einen oder mehrere Ströme gewandelt zum Betrieb des Elektromotors 3 verwendet wird bzw. verwendbar ist. Das Stromsteuermodul 17A und/oder die Übertragungsfunktion 11 kann ferner von einem der weiteren Module 17B-17D beeinflusst sein oder werden.

Letztlich wird vorzugsweise der Ist-Betriebsparameter 5A, 5B dem Positionssteuermodul 17D oder dem Geschwindigkeitssteuermodul 17C übergeben. Entweder das Positionssteuermodul 17D vollzieht einen Positionsvergleich und übergibt eine aus dem Ist-Betriebsparameter 5A, 5B abgeleitete Geschwindigkeitsinformation an das Geschwindigkeitssteuermodul 17C weiter oder das Geschwindigkeitsmodul 17C erhält Geschwindigkeitsinformationen durch den Ist-Betriebsparameter 5A, 5B.

Das Geschwindigkeitssteuermodul 17C kann dann mit den erhaltenen Geschwindigkeitsinformationen einen Geschwindigkeitsvergleich durchführen. Das Ergebnis dieses Geschwindigkeitsvergleichs kann dem Feldschwächungsmodul 17B übergeben werden, das eine Korrektur des Ergebnisses hinsichtlich einer beabsichtigten oder erforderlichen Feldschwächung des Elektromotors 3 durchführt und das Resultat dessen an das Stromsteuermodul 17A übergibt.

Das Stromsteuermodul 17A bildet dann unmittelbar oder mittelbar die Stellgröße 19, bevorzugt mit der Übertragungsfunktion 11.

Das Verhalten eines oder mehrerer der Module 17A-17D kann/können in vorteilhafter Weise von dem an dem Dynamikparametereingang 7 vorgegebenen oder vorgebbaren Dynamikparameter 8 abhängig sein.

Besonders bevorzugt wird jedenfalls die Übertragungsfunktion 11, deren Verstärkungsfaktor 10 und/oder das Verhalten des Stromsteuerungsmoduls 17A bei Änderung des am Dynamikparametereingang 7 vorgegebenen Dynamikparameters 8 verändert.

Die Feldschwächung mittels des Feldschwächungsmoduls 17B kann alternativ oder zusätzlich durch Veränderung des am Dynamikparametereingang 7 vorgegebenen Dynamikparameters 8 variiert werden. Dies erfolgt vorzugsweise derart, dass bei Vorgabe eines größeren oder kleineren Dynamikparameters 8 die Feldschwächung vergrößert oder verringert wird bzw. eine hierzu korrespondierende Anpassung der Stellgröße 9, der Übertragungsfunktion 11 und/oder des Verhaltens des Stromsteuerungsmoduls 17A erfolgt.

Entsprechendes gilt vorzugsweise auch für das Geschwindigkeitssteuermodul 17C und/oder des Positionssteuermodul 17D, die einzeln oder jeweils ein von dem Dynamikparameter 8 abhängig veränderbares Verhalten bzw. einen entsprechenden Einfluss auf die Stellgröße 9 haben.

Es kann vorgesehen sein, dass das Geschwindigkeitssteuermodul 17C oder das Positionssteuermodul 17D deaktiviert wird, während das nicht deaktivierte dieser Module 17C, 17D vorgibt, dass bei aktiviertem Geschwindigkeitssteuermodul 17C die Geschwindigkeit des Elektromotors 3 geregelt wird, während bei aktiviertem Positionssteuermodul 17D eine Position des Elektromotors 3 geregelt wird.

Es ist möglich, dass mehrere unterschiedliche Dynamikparameter 8 vorgegeben bzw. vorgebbar sind, insbesondere für unterschiedliche Betriebsmodi des Antriebs 1, des angetrieben Rührwerks 2 bzw. der hiermit betriebenen oder betreibbaren Küchenmaschine 100.

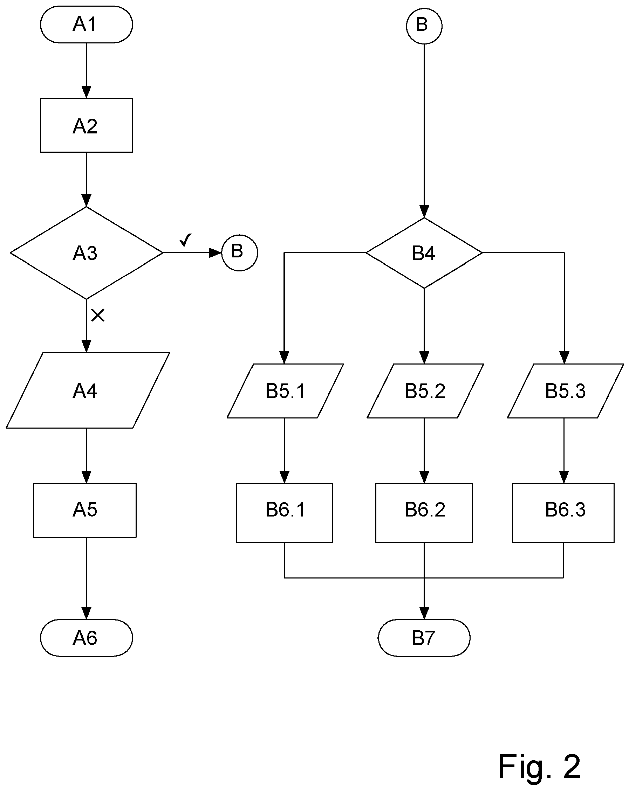

Im Folgenden wird anhand von Fig. 2 näher erläutert, wie bei einer bevorzugten Küchenmaschine 100, insbesondere über deren Eingabeeinrichtung 15, der Dynamikparameter 8 vorgegeben werden und hierdurch die Regelung des Elektromotors 3 beeinflusst werden kann. In Fig. 2 ist ein diesbezügliches Flussdiagramm mit einem ersten und einem zweiten Strang dargestellt.

Der erste Strang weist in einem ersten Schritt einen Start A1 auf. Zunächst erfolgt im Schritt A2 vorzugsweise die Auswahl des Betriebsmodus oder diese wird ermöglicht, insbesondere über die Eingabeeinrichtung 15. Die Auswahl des Betriebsmodus kann jedoch grundsätzlich auch bereits vorgegeben sein, sodass die Auswahl des Betriebsmodus im Schritt A2 entfallen kann oder eine Änderung des Betriebsmodus erfolgt oder ermöglicht werden kann. Als Betriebsmodus wird hierbei insbesondere eine kontinuierliche und/oder pulsierende Bearbeitung bzw. ein entsprechender Antrieb des Elektromotors 3 vorgegeben.

Im Schritt A3 kann, insbesondere über die Eingabeeinrichtung 15, ausgewählt werden oder auswählbar sein, ob eine Dynamik bzw. ein hierzu korrespondierender Dynamikparameter 8 vorgegeben werden soll. Falls nicht, wird ein fester bzw. vorgegebener Dynamikparameter 8 verwendet, also in Schritt A4 der Regelung zugrunde gelegt bzw. am Dynamikparametereingang 7 vorgegeben.

Im Schritt A5 erfolgt der ansonsten aus dem Stand der Technik bekannte Betriebsablauf der vorschlagsgemäßen Küchenmaschine 100 bzw. deren Antriebs 1 durch entsprechende Regelung des Elektromotors 3 und/oder Steuerung bzw. Regelung anderer Komponenten der Küchenmaschine 100, die auch eine Heizung zwecks Aufwärmens des bzw. der Produkte 14 aufweisen kann.

Wenn im Schritt A3 die Auswahl auf die Vorgabe einer bestimmten Dynamik bzw. eines hierzu korrespondierenden Dynamikparameters 8 fällt, wird an dieser Stelle das weitere Verfahren im zweiten Strang mit dem Schritt B4 fortgesetzt, in dem vorzugsweise unterschiedliche Dynamiken bzw. hierzu korrespondierende Dynamikparameter 8 ausgewählt werden oder auswählbar sind.

Im Schritt B4 kann ein schonender Modus bzw. ein zu einer geringen Dynamik korrespondierender Dynamikparameter 8 ausgewählt werden oder auswählbar sein. Danach wird das Verfahren mit Schritt B5.1 fortgesetzt, in dem ein erster Dynamikparameter 8 vorgegeben wird oder ist, der zu einer schonenden Verarbeitung des Produkts 14 und/oder zu einer verhältnismäßig trägen Regelung des Elektromotors 3 und/oder mit einem entsprechend geringen Verstärkungsfaktor 10 der Übertragungsfunktion 11 korrespondiert.

Alternativ oder zusätzlich kann in Schritt B4 ein rapider Modus bzw. ein zu einer hohen Dynamik korrespondierender Dynamikparameter 8 ausgewählt werden oder auswählbar sein. Danach wird das Verfahren mit Schritt B5.2 fortgesetzt, in dem ein vom ersten Dynamikparameter 8 unterschiedlicher zweiter Dynamikparameter 8 vorgegeben wird oder ist, der zu einer weniger schonenden Verarbeitung des Produkts 14 und/oder zu einer verhältnismäßig weniger trägen Regelung des Elektromotors 3 und/oder mit einem entsprechend höheren Verstärkungsfaktor 10 der Übertragungsfunktion 11 korrespondiert, wodurch der Elektromotor 3 dynamischer bzw. zügiger nachgeregelt werden kann.

Alternativ oder zusätzlich kann im Schritt B4 eine individuelle Dynamik ausgewählt werden, in der der Dynamikparameter 8 manuell veränderbar bzw. vorgebbar ist bzw. vorgegeben wird. Die Vorgabe kann mit einem geeigneten Steuerelement, beispielsweise numerisch oder grafisch, mittels eines Reglers, einer Symbolik oder auf sonstige Weise, wie von Steuerelementen bevorzugt grafischer Benutzerschnittstellen bekannt, erfolgen.

Im Folgenden werden in den Schritten B6.1, B6.2 bzw. B6.3 der Betriebsablauf des Antriebs 1 bzw. der Küchenmaschine 100 in entsprechender Weise unter Beeinflussung durch den in den vorherigen Schritten definierten Dynamikparameter 8 durchgeführt.

In Schritt B6.1 erfolgt ein schonender Betriebsablauf auf Basis des in Schritt B5.1 entsprechend vorgegebenen Dynamikparameters 8 nach diesbezüglicher Auswahl in Schritt B4.

Im alternativen Schritt B6.2 erfolgt ein rapider Betriebsablauf auf Basis des zuvor in Schritt B5.2 vorgegebenen entsprechenden Dynamikparameters 8 nach entsprechender Auswahl in Schritt B4.

Im alternativen Schritt B6.3 erfolgt der Betrieb der Küchenmaschine 100 mit individueller Dynamik des Antriebs 1 entsprechend des in Schritt B5.3 individuell vorgegebenen Dynamikparameters 8 nach entsprechender Auswahl in Schritt B4.

Nach Beendigung des Betriebsablaufs endet dieser in Schritt B7.

Im Betriebsablauf selbst erfolgt die Regelung des Elektromotors 3 bzw. des mittels des Elektromotors 3 angetriebenen Rührwerks 2 der Küchenmaschine 100 vorzugsweise beeinflusst von dem Dynamikparameter 8, der die Dynamik der Regelung beeinflusst.

Die Beeinflussung erfolgt vorzugsweise durch Änderung der Dynamik zwischen einem schonenden Betrieb, in dem eine Nachregelung der Geschwindigkeit bzw. Position des Elektromotors 3 bzw. seines Rotors/seiner Welle 60 langsamer erfolgt, hin zu einem rapiden Betriebsmodus, in dem unter Vorgabe eines entsprechend anderen Dynamikparameters 8 die Nachregelung der Geschwindigkeit bzw. Position schneller erfolgt, oder umgekehrt. Es kann zwischen diesen Modi Abstufungen unterschiedlicher Intensitäten bzw. hierzu korrespondierender Dynamikparameter 8 geben, bei deren Einstellung die Dynamik entsprechend variiert wird.

Fig. 3 zeigt die vorschlagsgemäße Küchenmaschine 100, deren Komponenten teilweise bereits erläutert worden sind.

Die vorschlagsgemäße Küchenmaschine 100 weist vorzugsweise übliche Komponenten in Form einer Basisstation 110, einer Aufnahme 111 für das Zubereitungsgefäß 120 sowie das Zubereitungsgefäß 120 selbst mit einem innenliegenden Rührer 121 auf. Der Rührer 121 wird durch den Elektromotor 3 angetrieben oder ist durch diesen antreibbar. Hierzu kann der Elektromotor 3 die Welle 60 in Rotation versetzen, die wiederum den Rührer 121 antreibt.

Angedeutet ist in Fig. 3 ferner der Antrieb 1 der Küchenmaschine 100, der auch den Elektromotor 3 aufweist und den das Verhalten des Elektromotors 3 bestimmenden Antriebsregler 4. Der Antriebsregler 4 kann über eine Stromversorgung 112 mit Energie versorgt werden, die er wiederum als Stellgröße 9 entsprechend für den geregelten Betrieb dem Elektromotor 3 zuführt.

In Fig. 3 ist die vorschlagsgemäße Küchenmaschine 100 mit einem im Gehäuse dieser integrierten Eingabeeinrichtung 15 dargestellt. Insbesondere ist die Eingabeeinrichtung 15 in die Basisstation 110 der Küchenmaschine 100 integriert.

Die Eingabeeinrichtung 15 kann alternativ oder zusätzlich abnehmbar und/oder baulich getrennt und mit der Basisstation 110 gekoppelt oder koppelbar realisiert sein. In einer bevorzugten Ausführungsform ist die Eingabeeinrichtung 15 durch ein mobiles Endgerät realisiert. Insbesondere kann es sich um ein Smartphone, Tablet oder dergleichen handeln. Ferner kann die Eingabeeinrichtung 15 bzw. können eins oder mehrere der Eingabemittel 15A-15E durch eine App oder dergleichen realisiert sein.

Die Eingabeeinrichtung 15 weist vorzugsweise eine grafische Benutzerschnittstelle auf, die eines oder mehrere der Eingabemittel 15A-15E zur Auswahl durch einen Benutzer bereitstellen. Insbesondere handelt es sich um (grafische) Schaltflächen. Es können jedoch auch andere Eingabemittel sein bzw. verwendet werden.

Wie bereits erläutert, können ein oder mehrere Dynamikparameter 8 in der Datenbank 12 hinterlegt und für den Betrieb der Küchenmaschine 100 auswählbar sein. Diese unterschiedlichen Dynamikparameter 8 können durch Symbole repräsentiert auswählbar sein und/oder Teil von Rezepten 13 bilden, jedoch auch unabhängig von Rezepten 13 hinterlegt, abrufbar und/oder aktivierbar sein.

Weiter können unterschiedliche Dynamikparameter 8 in der Datenbank 12 veränderbar sein, sodass über Anpassung der in der Datenbank 12 hinterlegten Dynamikparameter 8 in vorteilhafter Weise eine Optimierung des Antriebs 1 bzw. des Betriebs der Küchenmaschine 100 erfolgen kann.

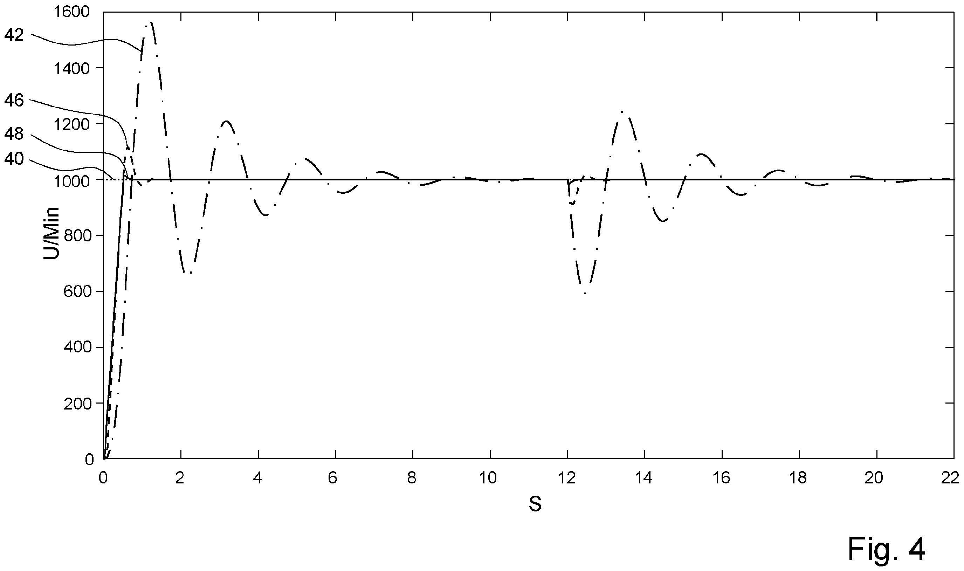

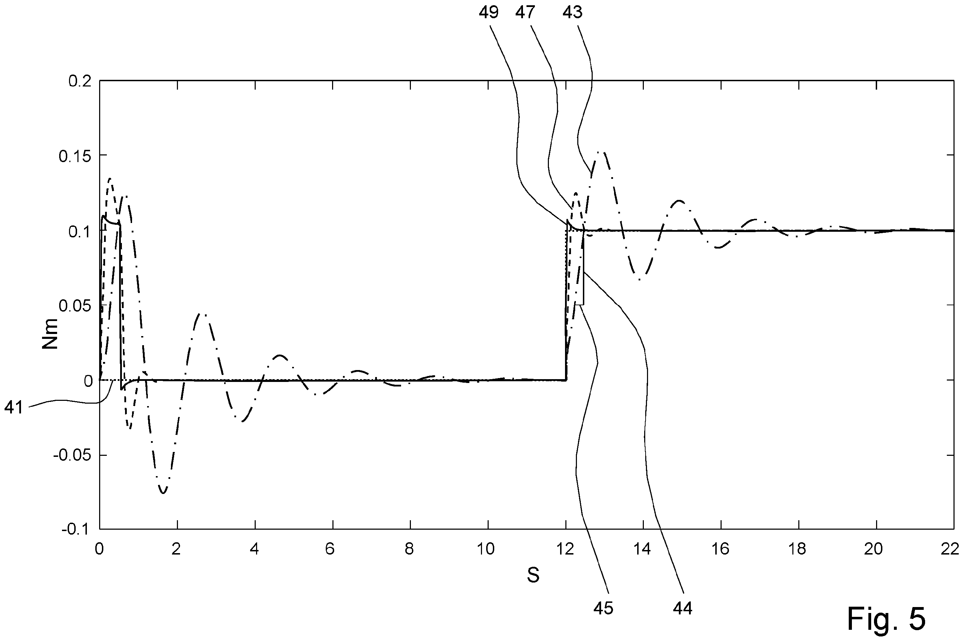

Anhand von Fig. 4 und Fig. 5 wird im Folgenden ein Beispiel für eine Regelung mit unterschiedlichen Dynamikparametern 8 im Detail erläutert. Es versteht sich, dass zum besseren Verständnis angeführte Zahlenwerte bevorzugte Beispiele darstellen, die erläuterten Prinzipien jedoch allgemeingültig sind und auch unabhängig von den konkreten Verläufen und Zahlenwerten Aspekte der vorliegenden Erfindung darstellen können.

Fig. 4 zeigt ein Diagramm von Drehzahlverläufen des Motors 3 in Umdrehungen pro Minute (im Deutschen U/Min abgekürzt, im Englischen rounds per minute - rpm abgekürzt) über der Zeit (s), zur Differenzierung auch Drehzahl-Istwertverläufe genannt. Fig. 5 zeigt ein Diagramm von zu den Drehzahlverläufen aus Fig. 4 korrespondierenden Drehmomentverläufen des Motors 3 in Newtonmeter (Nm) über der Zeit (s), zur Differenzierung auch Drehmoment-Istwertverläufe genannt.

In den Fig. 4 und Fig. 5 sind beispielhafte Verläufe für ein Anlaufverhalten ab der Zeit t = 0 Sekunden dargestellt. Im Zeitpunkt t = 0 Sekunden startet die Regelung ausgehend von einer Drehzahl n = 0 U/min des Motors 3 mit dem Drehzahlsollwert 40 von n = 1000 U/min. Der Drehzahlsollwert 40 U/min ändert sich im beispielhaften Verlauf nicht, bleibt also bei konstant n = 1000 U/min.

Im Anlauffall regelt der Antriebsregler 4 den Antrieb 1 bzw. Elektromotor 3 zur Erreichung des Drehzahl-Sollwerts von n = 1000 U/min durch Anheben des Drehmoments des Antriebs 1 bzw. Elektromotors 3. Alternativ oder zusätzlich regelt der Antriebsregler 4 den Antrieb 1 bzw. Elektromotor 3 zur Beibehaltung des Drehzahl-Sollwerts von N = 1000 U/min durch Anheben oder Absenken des Drehmoments des Antriebs 1 bzw. Elektromotors 3 nach einer Änderung der Last des Antriebs 1 bzw. Elektromotors 3.

Ein in Fig. 5 dargestellter Drehmoment-Sollwertverlauf 41 weist bei t = 12 Sekunden einen Sprung auf. Im Zusammenhang mit der vorschlagsgemäßen Küchenmaschine 100 kann ein derartiger Sprung durch Hinzufügen von Zutaten in das Zubereitungsgefäß 120 verursacht werden und wird im Folgenden auch als Lastsprung bezeichnet. Denn das Hinzufügen von Zutaten bremst den Rührer 121 ab, würde also unter Idealbedingungen bei konstanter Drehzahl des Motors 3 (Rotordrehzahl) einen sprungartigen Anstieg des Drehmoments des Motors 3 bedingen. Das reale Verhalten weicht von dem dargestellten idealen Drehzahl-Sollwertverlauf 40 und Drehmoment-Sollwertverlauf 41 naturgemäß ab.

Entsprechend dem vorgegebenen Drehzahl-Sollwert 40 ist der Antriebsregler 4 bestrebt, den Antrieb 1 bzw. Elektromotor 3 so nachzuregeln, dass die Drehzahl (Ist-Betriebsparameter 5A, 5B) auf den Drehzahl-Sollwert (Soll-Betriebsparameter 5C) geregelt wird. Im Darstellungsbeispiel erfordert der Lastsprung eine Drehmomenterhöhung von beispielhaft (stationär) 0,1 Newtonmeter, um den Drehzahlsollwert 40 von n = 1000 U/min zu halten.

Im Darstellungsbeispiel bewirkt der Antriebsregler 4 eine Versorgung des Antriebs 1 bzw. Elektromotors 3 mit einem veränderten, hier höheren Strom (Stellgröße 9), um den Lastsprung zu kompensieren und den Drehzahl-Sollwert 40 zu halten bzw. wieder zu erreichen.

Das Verhalten des Antriebsreglers 4 im Anlauffall und/oder die Reaktion des Antriebsreglers 4 auf den Lastsprung hängt vom gewählten bzw. aktiven Dynamikparameter 8 ab. Unterschiedliche Dynamikparameter 8 führen also zu einem jeweils unterschiedlichen Regelverhalten des Antriebsreglers 4 im Anlauffall bzw. bei dem Lastsprung. Insbesondere ändert der Antriebsregler 4 das Drehmoment bzw. eine das Drehmoment bestimmende Stellgröße 9 bei unterschiedlichen Dynamikparametern 8 entsprechend unterschiedlich, insbesondere unterschiedlich schnell.

In Abhängigkeit von dem gewählten bzw. eingestellten Dynamikparameter 8 verändert der Antriebsregler 4 entsprechend in unterschiedlicher Geschwindigkeit die Stellgröße 9. Im Ergebnis ergeben sich in Abhängigkeit von unterschiedlichen Dynamikparametern 8 ein erster Drehzahl-Istwertverlauf 42 mit einem korrespondierenden Drehmoment-Istwertverlauf 43, in dem zwecks Ermittlung eines Gradienten deine Drehmomentänderung 44 und eine Zeitspanne 45 gekennzeichnet sind, ein zweiter Drehzahl-Istwertverlauf 46 mit einem korrespondierenden Drehmoment-Istwertverlauf47, und ein dritter Drehzahl-Istwertverlauf 48 mit einem korrespondierenden Drehmoment-Istwertverlauf 49, wie in Fig. 4 und Fig. 5 dargestellt.

Bei der Küchenmaschine 100 führen entsprechend unterschiedliche Dynamikparameter 8 vorzugsweise dazu, dass bei Hinzufügen einer Zutat in das Zubereitungsgefäß 120 diese Zutat bei einer Regelung mit einem ersten Dynamikparameter 8 korrespondierend zum ersten Drehmoment-Istwertverlauf 43 (geringerer Gradient) schonend beschleunigt wird, während die Zutat bei einer Regelung mit einem anderen, zweiten Dynamikparameter 8 korrespondierend zum dritten Drehmoment-Istwertverlauf 49 (größerer Gradient) zerschlagen wird.

Es versteht sich, dass in Abhängigkeit von der Ausgestaltung des Antriebsreglers 4 Überschwinger entstehen können, wie in Fig. 4 und 5 zu sehen. Diese sind unabhängig von der Lehre der vorliegenden Erfindung zu sehen, sodass die voranstehenden und nachfolgenden Erläuterungen davon unabhängige Allgemeingültigkeit haben.

Im Darstellungsbeispiel liegen den unterschiedlichen Verläufen drei unterschiedliche Dynamikparameter 8 zugrunde, die eine langsamere, mittlere und schnellere Regelung bewirken.

Ein erster Drehzahl-Istwertverlauf 42 und der dazu korrespondierende erste Drehmoment-Istwertverlauf 43 resultieren hierbei aus einem Dynamikparameter 8 für eine langsamere bzw. trägere Regelung.

Charakteristisch für eine langsamere bzw. trägere Regelung ist vorzugsweise ein kleinerer Gradient der Änderung eines Ist-Betriebsparameters 5A bzw. der Stellgröße 9 durch den Antriebsregler 8.

Als Gradient wird vorzugsweise die Steigung des Kurvenverlaufs bezeichnet, der unmittelbar nach einer Änderung eines Sollwerts oder Systemzustands oder des Hinzutretens einer Störgröße durch äußeren Einfluss, hier also unmittelbar nach dem Lastsprung, resultiert. Etwaige Überschwinger wie im Ausführungsbeispiel, Störungen, asymptotische Verläufe und dergleichen bleiben bei der Bestimmung des/der Gradienten vorzugsweise außer Betracht.

Bei dem Drehmoment-Istwertverlauf 42 handelt es sich besonders bevorzugt um am Motor 3 oder Rührer 121 messbare Drehmomente. Der Drehmoment-Istwertverlauf 42 kann zu einem Verlauf der Stellgröße 9 korrespondieren bzw. diesem entsprechen.

Insgesamt ist bevorzugt, dass der Dynamikparameter 8 die Charakteristik des Antriebsreglers 4 derart beeinflusst, dass der Antriebsregler 4 einen Verlauf einer Stellgröße 9 bzw. eines mit der Stellgröße 9 beeinflussbaren Betriebsparameters 5 verändert, sodass ein Gradient des Verlaufs des Ist-Betriebsparameters 5A, 5B durch Änderung des Dynamikparameters 8 variiert werden kann. Der Dynamikparameter 8 korrespondiert damit vorzugsweise zu diesem Gradienten oder umgekehrt.

In Fig. 5 ist beispielhaft angedeutet, wie ein solcher Gradient bestimmt werden kann. Hierzu kann der Gradient durch Bildung eines Quotienten aus einer Änderung des Ist-Betriebsparameters 5A, 5B, hier der Drehmomentänderung 44, und einer Zeitspanne 45, innerhalb derer die Änderung erfolgt, berechnet werden.

Der Gradient kann zumindest im Wesentlichen einer maximalen oder durchschnittlichen bzw. mittleren Steigung entsprechen. Um Verfälschungen durch Anlauf- bzw. Sättigungseffekte zu vermeiden, kann der Gradient in einem Teilbereich - bevorzugt mittig - einer sich einstellenden Flanke des Verlaufs, beispielsweise zwischen 20 % und 80 % der stationären Werte bestimmt werden. Als Zeitspanne 45 kann die Zeitdifferenz ermittelt werden, die sich aus diesen Grenzen ergibt. Die genannten Grenzen sind oftmals sinnvoll, können jedoch auch anders gewählt werden, beispielsweise ab 10 % oder ab 30 % und/oder bis 70 % oder bis 90 %. Alternativ oder zusätzlich kann eine grafische Bestimmung durch Anlegen einer Tangente, durch ein hieran angelehntes Verfahren o.dgl. erfolgen. Im Folgenden wurden zur Ermittlung von Zahlenwerten und Verhältnissen beispielhaft Tangenten bei 50 % der Änderung (bei der Hälfte der den Lastsprung stationär kompensierenden Drehmomenterhöhung) zugrunde gelegt.

Ein zweiter Drehzahl-Istwertverlauf 46 und ein zweiter, dazu korrespondierender Drehmoment-Istwertverlauf 47 des Ausführungsbeispiels in Fig. 4 und Fig. 5 basieren auf einem abweichenden Dynamikparameter 8, insbesondere für eine Regelung, die schneller als die langsamere Regelung ist, im Folgenden als mittelschnelle Regelung bezeichnet. Entsprechend führt die mittelschnelle Regelung zu einem größeren Gradienten als die langsamere Regelung. Im Übrigen gelten unveränderte Randbedingungen, wozu auf die voranstehende Erläuterung verwiesen wird.

Die schnellere Regelung mit einem wiederum abweichenden, der schnelleren Regelung entsprechenden Dynamikparameter 8 führt, wie in Fig. 4 und Fig. 5 anhand eines dritten Drehzahl-Istwertverlaufs 48 und eines dritten Drehmoment-Istwertverlaufs 49 dargestellt, zu einer wiederum schnelleren als die mittelschnelle Regelung. Charakterisiert ist die schnellere Regelung durch einen Gradienten des Drehmoment-Istwertverlaufs 49, der größer ist als der, der sich bei der mittelschnellen Regelung einstellt. Im Übrigen gelten weiterhin unveränderte Randbedingungen, wozu erneut auf die voranstehende Erläuterung verwiesen wird.

Im Darstellungsbeispiel sind Gradienten der Änderung des jeweiligen Drehmoment-Istwertverlaufs 43, 47, 49 vorzugsweise Indikatoren für die jeweilige Regelgeschwindigkeit.

Insgesamt bedeutet dies, dass unterschiedliche Dynamikparameter 8 entsprechend unterschiedliche Gradienten des jeweiligen Verlaufs des Ist-Betriebsparameters 5A bewirken, die sich bei gleicher Änderung des Soll-Betriebsparameters 5C oder bei gleicher einsetzender Störgröße - wie einem Lastsprung, der im Darstellungsbeispiel eine Änderung des Drehmoments für eine gleichbleibende Drehzahl bedingt - oder bei gleicher Änderung eines anderen Betriebszustands einstellen.

Insbesondere führen unterschiedliche Dynamikparameter 8 bei einer gleichen Änderung des Soll-Betriebsparameters 5C zu Verläufen des entsprechenden Ist-Betriebsparameters 5A, 5B mit unterschiedlichen Gradienten, die zu den Dynamikparametern 8 korrespondieren. Alternativ oder zusätzlich führen unterschiedliche Dynamikparameter 8 bei einer gleichen Änderung der Motorlast zu Verläufen des entsprechenden Ist-Betriebsparameters 5A, 5B (des Motordrehmoments) mit unterschiedlichen Gradienten, die zu den Dynamikparametern 8 korrespondieren.

Es versteht sich, dass unterschiedlich stark ausgeprägte Änderungen von Soll-Betriebsparametern 5C, unterschiedlich stark ausgeprägte Änderungen von Störgrö-βen oder unterschiedlich stark ausgeprägte Änderungen von sonstigen Betriebszuständen bei gleichem Dynamikparameter 8 zu unterschiedlichen Gradienten führen können. Daher werden im Folgenden Gradienten bei gleichartigen Änderungen und unterschiedlichen Dynamikparametern 8 verglichen.

Es hat sich gezeigt, dass es besonders vorteilhaft für den Betrieb insbesondere von Küchenmaschinen 100 ist, wenn der Dynamikparameter 8 in bestimmten Bereichen änderbar ist.

Insbesondere für Küchenmaschinen 100 hat sich in überraschender Weise herausgestellt, dass es Vorzugsbereiche für Absolutwerte der Gradienten und dazu korrespondierende Dynamikparameter 8 gibt, die eine Variation der Gradienten in den entsprechenden Bereichen ermöglichen.

So hat es sich für den Betrieb von Küchenmaschinen 100 als vorteilhaft erwiesen, dass der Dynamikparameter 8 so einstellbar ist, dass eine zu den Gradienten korrespondierende Krafteinwirkung des Rührers 121 auf Zutaten so beeinflussbar ist, dass zwischen Krafteinwirkungen gewählt werden kann, die einerseits zu einem eher schonenden, zumindest im Wesentlichen zerstörungsfreien Rühren und andererseits zu einem Zerkleinern führen.

Die Krafteinwirkungen des Rührers 121 auf Zutaten korrespondieren zu Gradienten, weshalb sich in überraschender Weise bevorzugte Gradientenverhältnis-Bereiche bzw. hierzu führende Dynamikparameter-Bereiche als besonders vorteilhaft erwiesen haben.

Grundsätzlich ist es bevorzugt, dass der Dynamikparameter 8 so einstellbar ist, dass sich ein Gradient eines Drehmoment-Istwertverlaufs 43, 47, 49 zumindest in einem Teilbereich des Intervalls 0,1 Newtonmeter pro Sekunde bis 500 Newtonmeter pro Sekunde ergibt.

Weiter besonders bevorzugt ist der Dynamikparameter 8 so einstellbar, dass bei einer Lasterhöhung von 0,1 N ausgehend vom Leerlauffall Gradienten eines Drehmoment-Istwertverlaufs 43, 47, 49 zumindest zwischen 0,5 Newtonmeter pro Sekunde und 2 Newtonmeter pro Sekunde realisierbar sind, insbesondere zwischen 1 und 2 Newtonmeter pro Sekunde.

Alternativ oder zusätzlich ist bevorzugt, dass sich der Dynamikparameter 8 so einstellbar ist, dass bei einer Lasterhöhung ausgehend von Leerlauf um 1,5 N jedenfalls Gradienten zwischen 10 Newtonmeter pro Sekunde und 100 Newtonmeter pro Sekunde realisierbarer sind.

Alternativ oder zusätzlich zu den genannten Absolutwerten für die Gradienten hat sich insbesondere für Küchenmaschinen 100 grundsätzlich die Einstellbarkeit bestimmter Gradientenverhältnisse bzw. Spannen von Gradientenverhältnissen durch den Dynamikparameter 8 als besonders vorteilhaft erwiesen.

Der Gradient ist also bei Wahl eines ersten Dynamikparameters 8 um den Faktor größer oder kleiner als bei der Wahl eines anderen, ebenfalls einstellbaren Dynamikparameters 8, wobei als Faktor ein Verhältnis bzw. ein Quotient der Gradienten an den Einstellgrenzen des Dynamikparameters 8 bezeichnet wird.

Es ist bevorzugt, dass der Dynamikparameter 8 jedenfalls in einem Bereich verstellbar ist, der zu einer Gradientenänderung von mindestens Faktor 2, vorzugsweise Faktor 4 führt.

Es ist alternativ oder zusätzlich bevorzugt, dass der Dynamikparameter 8 jedenfalls in einem Bereich verstellbar ist, der zu einer Gradientenänderung von weniger als Faktor 1000, vorzugsweise weniger als Faktor 500 führt. Dies gilt insbesondere unter Beibehaltung aller sonstigen Randbedingungen und gleicher Änderung eines Sollwerts oder gleicher Änderung der Last bzw. gleicher sonstiger Störung, also bei einer Änderung beschränkt auf den Dynamikparameter 8.

Mit anderen Worten ist der Dynamikparameter 8 vorzugsweise zwischen einer ersten und einer zweiten Einstellung veränderbar, sodass dieselbe Änderung eines Betriebszustands des Elektromotors 3, insbesondere dieselbe Änderung eines Soll-Betriebsparameters 5C oder Hinzutreten derselben Störgröße bzw. dieselbe Änderung eines Systemzustands wie einer Laständerung, jeweils zu einem Verlauf des Ist-Betriebsparameters 5A oder einer dazu korrespondierenden Stellgröße 9 mit einem Gradienten führt, wobei der Quotient der Gradienten bei den unterschiedlichen Einstellungen des Dynamikparameters 8 größer als zwei, vorzugsweise mindestens vier, und/oder geringer als 1000, vorzugsweise geringer als 500 ist.

Weiter bevorzugt ist eine Gradientenänderung von insgesamt mindestens Faktor 4 und/oder jeweils Faktor 2 zwischen den gegebenenfalls diskret wählbaren Dynamikparametern 8.

Der Dynamikparameter 8 deckt also vorzugsweise eine Spanne ab, die zu Gradienten führt, die zwischen dem einfachen und dem doppelten, weiter vorzugsweise zwischen dem einfachen und dem vierfachen liegen.

Kurz gesagt hat es sich als vorteilhaft erwiesen, wenn das Gradientenverhältnis der Gradienten an den Grenzen des einstellbaren Bereichs des Dynamikparameters 8 mindestens zwei und, weiter bevorzugt, mindestens vier und/oder geringer als 1000, vorzugsweise geringer als 500 durch den Dynamikparameter 8 einstellbar ist.

Letzteres gilt ohne Beschränkung der Allgemeinheit insbesondere bei einer Küchenmaschine 100, bei der ausgehend vom Leerlauf (Küchenmaschine 100 mit leerem Zubereitungsgefäß), bei der eine Drehzahl des Elektromotors 3 von 1000 U/min als Sollwert vorgegeben und erreicht ist, die Last des Motors erhöht wird, die durch eine Erhöhung des Drehmoments des Motors um 0,1 N kompensiert wird, um die Drehzahl stationär auf den unveränderten Sollwert zu regeln. Zwecks Bewertung des Gradientenverhältnisses kann also eine Messung zugrunde gelegt werden bei der ein Lastsprung erfolgt, der 0,1 Newtonmeter Änderung des Drehmoments des Elektromotors 3 erfordert, ausgehend vom Leerlauf bei einer Drehzahl n=1000 U/min, die aufrechterhalten werden soll.

Grundsätzlich können durch Änderung des Dynamikparameters 8 jedoch auch erheblich höhere Werte für Gradientenverhältnisse von beispielsweise mindestens Faktor 10, Faktor 20, Faktor 100 oder sogar höher erreicht werden bzw. sinnvoll sein. Beispielsweise ist der Dynamikparameter 8 also vorzugsweise so einstellbar, dass eine Variation des Gradientenverhältnisses zwischen Faktor 2 und Faktor 200 ermöglicht wird.

Einzelne Aspekte der vorliegenden Erfindung können getrennt voneinander und in unterschiedlichen Kombinationen realisiert sein und jeweils mit Vorteilen einhergehen, auch wenn dies nicht für jede Kombination explizit erwähnt und erläutert ist.

### Bezugszeichenliste:

- 1: Antrieb
- 2: Rührwerk
- 3: Elektromotor
- 4: Antriebsregler
- 5: Betriebsparameter
- 5A: Ist-Betriebsparameter
- 5B: Konvertierter Ist-Betriebsparameter
- 5C: Soll-Betriebsparameter
- 6: Betriebsparametereingang
- 7: Dynamikparametereingang
- 8: Dynamikparameter
- 9: Stellgröße
- 9A: Antriebsregler-Stellgröße
- 9B: konvertierte Stellgröße
- 9C: Versorgungs-Stellgröße
- 10: Verstärkungsfaktor
- 11: Übertragungsfunktion
- 12: Datenbank
- 13: Rezept
- 14: Produkt
- 15: Eingabeeinrichtung
- 15A: Eingabemittel Geschwindigkeit/Position
- 15B: Eingabemittel Modus Kontinuierlich/Intervall
- 15C: Eingabemittel Dynamik Position
- 15D: Eingabemittel Dynamik Geschwindigkeit
- 15E: Eingabemittel Dynamik Individuell
- 16: Befehl
- 17: Steuerungseinrichtung
- 17A: Stromsteuerungsmodul
- 17B: Feldschwächungsmodul
- 17C: Geschwindigkeitsteuerungsmodul
- 17D: Positionssteuermodul
- 18: Konversionseinrichtung
- 18A: Erstes Transformationsmodul
- 18B: Zuordnungsmodul
- 18C: Zweites Transformationsmodul
- 19: Versorgungseinrichtung
- 19A: Erstes Versorgungsmodul
- 19B: Zweites Versorgungsmodul
- 19C: Drittes Versorgungsmodul
- 20: Messeinrichtung
- 21: Zweite Messeinrichtung
- 22: Rückkopplungseinrichtung
- 22A: Transformationsmodul
- 22B: Flussmodul
- 22C: Geschwindigkeitsmodul
- 23: Überwachungseinrichtung
- 23A: Betriebsparametermodul
- 23B: Geschwindigkeitsmodul
- 23C: Überwachungsergebnis
- 40: Drehzahl-Sollwertverlauf
- 41: Lastverlauf
- 42: erster Drehzahl-Istwertverlauf
- 43: erster Drehmoment-Istwertverlauf
- 44: Drehmomentänderung
- 45: Zeitspanne
- 46: zweiter Drehzahl-Istwertverlauf
- 47: zweiter Drehmoment-Istwertverlauf
- 48: dritter Drehzahl-Istwertverlauf
- 49: dritter Drehmoment-Istwertverlauf
- 60: Welle
- 100: Küchenmaschine
- 110: Basisstation
- 111: Aufnahme
- 112: Stromversorgung
- 120: Zubereitungsgefäß
- 121: Rührer
- A: Rotationsachse
- A1: Start
- A2: Auswahl des Betriebsmodus
- A3: Auswahl Dynamikvorgabe
- A4: Vorgabe Dynamikparameter "fix"
- A5: Betriebsablauf
- A6: Ende Betriebsablauf
- B4: Auswahl Dynamik
- B5.1: Vorgabe Dynamikparameter "Schonen"
- B5.2: Vorgabe Dynamikparameter "Rapide"
- B5.3: Vorgabe Dynamikparameter "Individuell"
- B6.1: Betriebsablauf "Schonen"
- B6.2: Betriebsablauf "Rapide"
- B6.3: Betriebsablauf "Individuell"
- B7: Ende Betriebsablauf

## Patentansprüche

1. Antrieb (1) für ein Rührwerk (2) einer elektrisch betriebenen Küchenmaschine (100), wobei der Antrieb (1) einen Elektromotor (3) und einen Antriebsregler (4) zur Regelung des Elektromotors (3), insbesondere seiner Rotordrehzahl oder Rotorposition, aufweist,
**dadurch gekennzeichnet,**
**dass** der Antriebsregler (4) einen Dynamikparametereingang (7) aufweist, über den dem Antriebsregler (4) mindestens ein Dynamikparameter (8) vorgebbar ist, wobei der Antriebsregler (4) dazu ausgebildet ist, durch Änderung des Dynamikparameters (8) sein Regelverhalten, insbesondere seine Regelgeschwindigkeit, zu ändern.

2. Antrieb nach Anspruch 1, **dadurch gekennzeichnet, dass** der Antriebsregler (4) dazu ausgebildet ist, dass sich durch Änderung des Dynamikparameters (8) sein durch eine Änderung einer Last oder eines Soll-Betriebsparameters (5C) des Elektromotors (3) hervorrufbares Regelverhalten ändert.

3. Antrieb nach Anspruch 1 oder 2, **dadurch gekennzeichnet, dass** der Antriebsregler (4) dazu ausgebildet ist, dass durch Änderung des Dynamikparameters (8) die Nachregelung mindestens eines Ist-Betriebsparameters (5A, 5B) des Elektromotors (3) verändert wird.

4. Antrieb nach Anspruch 3, **dadurch gekennzeichnet, dass** der Ist-Betriebsparameter (5A, 5B), der insbesondere eine Drehzahl, ein Drehmoment oder eine Rotorposition des Elektromotors (3) repräsentiert, zu einer Stellgröße (9) des Elektromotors (3), insbesondere zu einem elektrischen Strom zum Antrieb des Elektromotors (3), korrespondiert.

5. Antrieb nach Anspruch 3 oder 4, **dadurch gekennzeichnet, dass** der Antriebsregler (4) dazu ausgebildet ist, den Ist-Betriebsparameter (5A, 5B) in Abhängigkeit von dem Dynamikparameter (8) unterschiedlich schnell nachzuregeln.

6. Antrieb nach Anspruch 5, **dadurch gekennzeichnet, dass** die unterschiedlich schnelle Nachregelung mittels eines durch den Dynamikparameter (8) veränderten Verstärkungsfaktors (10) in einer Übertragungsfunktion (11) des Antriebsreglers (4) realisiert wird oder ist.

7. Antrieb nach einem der Ansprüche 3 bis 6, **dadurch gekennzeichnet, dass** der Antriebsregler (4) dazu ausgebildet ist, dass bei Änderung des Dynamikparameters (8) der Ist-Betriebsparameter (5A, 5B) dem Soll-Betriebsparameter (5C) des Elektromotors (3) schneller oder langsamer angenähert wird.

8. Antrieb nach einem der Ansprüche 3 bis 7, **dadurch gekennzeichnet, dass** der Antriebsregler (4) dazu ausgebildet ist, vor und nach Änderung des Dynamikparameters (8) den Ist-Betriebsparameter (5A, 5B) des Elektromotors (3) unterschiedlich nachzuführen, sodass auf eine durch eine gleichartige Änderung der Last des Elektromotors (3) hervorgerufene gleichartige Änderung des Betriebszustands des Elektromotors (3) eine dem veränderten Dynamikparameter (8) entsprechend abweichende Änderung des Ist-Betriebsparameters (5A, 5B) zur Kompensation der Änderung des Betriebszustands des Elektromotors (3) bewirkt wird, vorzugsweise wobei die Änderung des Betriebszustands ein geänderter, vom Elektromotor (3) zu überwindender mechanischer Widerstand, eine Drehzahländerung des Elektromotors (3) und/oder eine geänderte Position des Rotors ist oder aufweist.

9. Antrieb nach einem der voranstehenden Ansprüche, **dadurch gekennzeichnet, dass** der Dynamikparameter (8) zwischen einer ersten und einer zweiten Einstellung veränderbar ist, sodass sich die bei derselben Änderung eines Betriebszustands des Elektromotors (3), insbesondere einer Änderung eines Soll-Betriebsparameters (5C), Hinzutreten einer Störgröße oder Änderung eines Systemzustands wie einer Laständerung, jeweils zu einem Verlauf des Ist-Betriebsparameters (5A) oder einer dazu korrespondierenden Stellgröße 9 mit einem Gradienten führt, wobei der Quotient der Gradienten größer als zwei, vorzugsweise mindestens vier und/oder geringer als 1000, vorzugsweise geringer als 500 ist.

10. Küchenmaschine (100) mit dem Antrieb (1) nach einem der Ansprüche 1 bis 9, wobei die Küchenmaschine ein Rührwerk (2) aufweist, das mittels des Antriebs (1) antreibbar ist, wozu der Antrieb (1) mit einem Rührer (112) der Küchenmaschine (100) koppelbar oder gekoppelt und mittels des Antriebs (1) in einem Zubereitungsgefäß (120) bewegbar ist, um ein im Zubereitungsgefäß (120) aufgenommenes Produkt (14) zu verarbeiten.

11. Küchenmaschine nach einem der Anspruch 10, **dadurch gekennzeichnet, dass** die Küchenmaschine (100) eine Eingabeeinrichtung (15) aufweist, die mit dem Antriebsregler (4) gekoppelt und dazu ausgebildet ist, den dem Antriebsregler (4) vorgegebenen Dynamikparameter (8) zu ändern, sodass sich das Regelverhalten des Antriebsreglers (4) entsprechend ändert.

12. Küchenmaschine nach der Anspruch 10 oder 11, **dadurch gekennzeichnet, dass** die Küchenmaschine (100) eine Datenbank (12) zur Steuerung des Antriebs (1) aufweist, in der unterschiedliche Dynamikparameter (8) jeweils Rezepten (13) und/oder zu verarbeitenden Produkten (14) zugeordnet sind, und dass die Küchenmaschine (100) dazu ausgebildet ist, bei Steuerung der Küchenmaschine (100) basierend auf einem der Rezepte (13) oder bei Vorgabe der Verarbeitung eines der Produkte (14) dem Antriebsregler (4) den jeweils zugeordneten Dynamikparameter (8) vorzugeben.

13. Küchenmaschine nach Anspruch 11 oder 12, **dadurch gekennzeichnet, dass** die Eingabeeinrichtung (15) zur bevorzugt manuellen Eingabe eines zu dem Dynamikparameter (8) korrespondierenden Befehls (16) aufweist und dass die Küchenmaschine (100) dazu ausgebildet ist, auf Eingabe des Befehls (16) dem Antriebsregler (4) den zu dem Befehl (16) korrespondierenden neuen oder geänderten Dynamikparameter (8) vorzugeben.

14. Verfahren zur Steuerung eines Antriebs (1) für ein Rührwerk (2) einer elektrisch betriebenen Küchenmaschine (100), wobei der Antrieb (1) einen Elektromotor (3) und einen Antriebsregler (4) zur Regelung einer Rotorbewegung des Elektromotors (3), insbesondere seiner Rotordrehzahl oder Rotorposition, aufweist,
**dadurch gekennzeichnet,**
**dass** durch Änderung eines dem Antriebsregler (4) vorgegebenen Dynamikparameters (8) ein Regelverhalten, insbesondere eine Regelgeschwindigkeit, des Antriebsreglers (4) geändert wird.

15. Computerprogrammprodukt aufweisend Programmcodemittel die, wenn sie ausgeführt werden, bei einem Antrieb (1) nach einem der Ansprüche 1 bis 9 oder einer Küchenmaschine (100) nach einem der Ansprüche 10 bis 13 das Verfahren gemäß Anspruch 14 bewirken.
